Europäisches Patentamt

European Patent Office

Office européen des brevets

(19)

(11) Veröffentlichungsnummer : **0 096 924**
**B1**

(12) **EUROPÄISCHE PATENTSCHRIFT**

(45) Veröffentlichungstag der Patentschrift :
16.04.86

(21) Anmeldenummer : 83200804.9

(22) Anmeldetag : 03.06.83

(51) Int. Cl.⁴ : **G 11 B 15/66, G 11 B 15/32**

(54) **Aufzeichnungs- und/oder Wiedergabegerät.**

(30) Priorität : **11.06.82 AT 2281/82**

(43) Veröffentlichungstag der Anmeldung :
**28.12.83 Patentblatt 83/52**

(45) Bekanntmachung des Hinweises auf die Patenterteilung : **16.04.86 Patentblatt 86/16**

(84) Benannte Vertragsstaaten :
**DE FR GB IT**

(56) Entgegenhaltungen :
**EP-A- 0 023 744**
**DE-A- 1 499 804**
**DE-A- 2 934 224**
**DE-A- 3 019 570**
**DE-A- 3 112 485**
**US-A- 3 869 099**
**Patent Abstracts of Japan Band 3, Nr. 127. 23.**
**Oktober 1979 Seite 142E146**

(73) Patentinhaber : **N.V. Philips' Gloeilampenfabrieken**
**Groenewoudseweg 1**
**NL-5621 BA Eindhoven (NL)**

(72) Erfinder : **Beitler, Franz**
**INT. OCTROOIBUREAU B.V. Prof. Holstlaan 6**
**NL-5656 AA Eindhoven (NL)**

(74) Vertreter : **Van Weele, Paul Johannes Frits et al**
**INTERNATIONAAL OCTROOIBUREAU B.V. Prof. Hols-**
**tlaan 6**
**NL-5656 AA Eindhoven (NL)**

## Beschreibung

Die Erfindung betrifft ein Aufzeichnungs- und/oder Wiedergabegerät für einen in einer Kassette untergebrachten, bandförmigen Aufzeichnungsträger, die zum Aufwickeln desselben mindestens einen durch jede der beiden zueinander parallelen Hauptwände der Kassette axial zugänglichen, rotierend antreibbaren Wickelkern aufweist, mit einer Kassettenaufnahme, die zwischen einer Ladeposition, in der die mit ihren Hauptwänden parallel zu einem vorgegebenen Einführweg ausgerichtete Kassette längs dieses Einführweges in dieselbe einführbar ist, und einer Arbeitsposition, in der die eingeführte Kassette eine Betriebslage im Gerät einnimmt und mit dem Wickelkern ein geräteseitiger, rotierend antreibbarer Wickeldorn durch die demselben zugewandte Hauptwand der Kassette in Wirkverbindung steht, verstellbar ist und die einen Wickelkernniederhalter aufweist, der an einem an der Kassettenaufnahme vorgesehenen, mit einem den Wickelkernniederhalter tragenden Abschnitt im wesentlichen parallel zu den Hauptwänden der eingeführten Kassette verlaufenden Trägerteil angebracht ist und der durch die vom Wickeldorn abgewandte Hauptwand der Kassette mit dem Wickelkern in Wirkverbindung bringbar ist und bei in ihrer Betriebslage sich befindender Kassette den Wickelkern in einer vorgegebenen Relativlage zum Wickeldorn hält. Ein solches Gerät ist beispielsweise aus der AT-PS-365 367 bekannt.

Bei dem bekannten Gerät, das zum Zusammenwirken mit einer zwei nebeneinanderliegende Wickelkerne enthaltenden Kassette ausgebildet ist, sind die mit den beiden Wickelkernen in Wirkverbindung bringbaren Wickelkernniederhalter an einer parallel zu den Hauptwänden der eingeführten Kassette verlaufenden Deckwand der Kassettenaufnahme angebracht und ragen durch diese Deckwand hindurch in den Aufnahmeraum der Kassettenaufnahme. Dabei ist der Abstand zwischen den durch diese Deckwand der Kassettenaufnahme hindurchragenden Wickelkernniederhaltern und einer diese Deckwand gegenüberliegenden Bodenwand der Kassettenaufnahme so gross gewählt, dass die Kassette mit einer ihrer beiden Hauptwände an der Bodenwand entlang gleitend in die Kassettenaufnahme einführbar bzw. aus derselben herausführbar ist, ohne dass die Kassette mit den durch diese Deckwand hindurchragenden Wickelkernniederhaltern in Berührung kommt, wodurch ein unbehindertes Einführen und Herausführen der Kassette gewährleistet und auch eine Beschädigung der Wickelkernniederhalter beim Einführen und Herausführen der Kassette ausgeschlossen ist. In diesem Fall ist somit der Abstand zwischen der die Wickelkernniederhalter tragenden Deckwand und der Bodenwand der Kassettenaufnahme grösser dimensioniert, als dies an sich zur Aufnahme der Kassette notwendig ist. Eine solche grössere Dimensionierung hat aber einen grösseren Raumbedarf für die Kassettenaufnahme im Gerät zur Folge. Bei dem bekannten Gerät werden ferner die Wickelkernniederhalter erst bei sich bereits in ihrer Betriebslage befindender Kassette mit den Wickelkernen in Wirkverbindung gebracht. Dies erfolgt so, dass beim Verstellen der Kassettenaufnahme von ihrer Ladeposition in ihre Arbeitsposition bereits vor Erreichen der Arbeitsposition die Kassette gegen geräteseitige Positionieranschläge stösst und von diesen in ihrer Betriebslage festgehalten und positioniert wird und dass bei der danach zwischen der in ihrer Betriebslage sich befindenden Kassette und der weiter bis in ihre Arbeitslage verstellten Kassettenaufnahme auftretenden Relativbewegung die an der Kassettenaufnahme angebrachten Wickelkernniederhalter an die Wickelkerne in der Kassette herangeführt und schliesslich mit denselben in Wirkverbindung gebracht werden. Zur Erzielung dieser Relativbewegung ist eine zur Verstellbewegung der Kassettenaufnahme zum Überführen der Kassette in ihre Betriebslage zusätzliche Verstellbewegung erforderlich, die auch einen zusätzlichen Raumbedarf im Gerät erfordert. Sowohl die grössere Dimensionierung der Kassettenaufnahme als auch die zusätzliche Verstellbewegung derselben führen zu einem relativ grossen Raumbedarf im Gerät, der aber im Hinblick auf einen kompakten Geräteaufbau möglichst gering sein soll.

Die Erfindung hat sich zur Aufgabe gestellt, ein Gerät eingangs angeführter Art so zu verbessern, dass die beiden vorgenannten Schwierigkeiten auf möglichst einfache Weise beseitigt sind. Hierzu ist die Erfindung dadurch gekennzeichnet, dass der Trägerteil mit seinem den Wickelkernniederhalter tragenden Abschnitt zumindest quer zu den Hauptwänden der eingeführten Kassette zwischen einer Ruhelage, in der der Wickelkernniederhalter ausserhalb des Einführweges der Kassette liegt, und einer Wirklage, in der der Wickelkernniederhalter an den Wickelkern herangeführt ist, an der Kassettenaufnahme verstellbar gehalten ist und dass zur Verstellung des Trägerteiles und der Kassettenaufnahme mindestens ein gegenüber derselben verstellbarer Betätigungsteil vorgesehen ist, der in den Einführweg der Kassette ragt, wobei beim Einführen der Kassette diese den Betätigungsteil entgegen der Kraft einer Rückstellfeder mitnimmt und dieser den Trägerteil von seiner Ruhelage in seine Wirklage verstellt und dabei den Wickelkernniederhalter bereits bei in ihrer Ladeposition sich befindender Kassettenaufnahme an den Wickelkern heranführt. Hierdurch ist auf einfache Weise erreicht, dass der Wickelkernniederhalter aus dem Einführweg der Kassette verstellbar ist und daher beim Einführen der Kassette nicht in den Aufnahmeraum der Kassettenaufnahme ragt, so dass derselbe besonders klein ausgebildet sein kann. Damit ist vorteilhafterweise eine kleine Dimensionierung der mit einem Wickelkernniederhalter ausgerüsteten Kassettenaufnahme gewährleistet, so dass dieselbe nur wenig Raumbedarf in Anspruch nimmt. Ausserdem ist hierdurch auf einfache Weise erreicht, dass der Wichelkernniederhalter bereits beim Einführen der Kassette in die sich hierbei in ihrer Ladeposition befindende Kassettenaufnahme an den Wickelkern in der Kassette herangeführt wird, womit sich aber beim Verstellen der Kassettenaufnahme von ihrer Ladeposition in ihre Arbeitsposition eine zusätzliche Verstellbewegung zur Erzielung einer wie beim bekannten Gerät erforderlichen Relativbewegung zwischen der in ihrer Betriebslage sich befindenden Kassette und der Kassettenaufnahme zum Heranführen des Wickelkernniederhalters zum Wickelkern erübrigt, so dass vorteilhafterweise eine relativ kleine Verstellbewegung für die Kassettenaufnahme erreicht und der für die Verstellung derselben erforderliche Raumbedarf relativ klein ist. Damit ist insgesamt ein in zweifacher Hinsicht verringerter Raumbedarf für die Kassettenaufnahme erreicht, was eine erhebliche Verringerung der Gesamtdimension eines derartigen Gerätes ergibt.

An dieser Stelle sei erwähnt, dass aus der DE-AS-1 927 531 ein Gerät bekannt ist, das auch einen mit einem in einer Kassette untergebrachten Wickelkern in Wirkverbindung bringbaren Wickelkernniederhalter aufweist. Bei diesem Gerät handelt es sich jedoch um kein Gerät der eingangs angeführten erfindungsgemässen Gattung, da dasselbe keine zwischen einer Ladeposition und einer Arbeitsposition verstellbare Kassettenaufnahme aufweist, sondern eine durch drei punktförmige Auflager gebildete, im Gerät feststehende Kassettenauflage zur Aufnahme der Kassette besitzt. Der Wickelkernniederhalter ist hier nicht an einer verstellbaren Kassettenaufnahme angebracht, sondern geräteseitig in den Wickeldorn koaxial eingebaut, und er gelangt dann mit dem Wickelkern in Wirkverbindung, wenn die Kassette ihre Betriebslage einnimmt. Eine solche Konstruktion ist sehr aufwendig, da der Wickelkernniederhalter innerhalb des Wickeldornes verstellbar aufgenommen ist, was einen komplizierten Aufbau erforderlich macht. Demgegenüber ist die Ausführung gemäss der vorliegenden Erfindung wesentlich einfacher, stabiler und kompakter aufgebaut.

Als technologischer Hintergrund werden nachstehend noch drei Dokumente zitiert, aus denen an sich S-3 eine Mechanik bekannt ist, welche ausgelöst durch das Einführen eine Kassette automatisch Einstellbewegungen zwischen einer Kassettenaufnahme bzw. der Kassette und anderen Teilen eines Aufzeichnungs- oder Wiedergabegerätes bewirkt. Als erstere wird die DE-Offenlegungsschrift 3 112 485 genannt, worin ein Kassetten-Tonbandgerät gezeigt wird, welches einen Kassettenhalter, einen schwenkbaren Betätigungsarm, eine Schiebeplatte, welche sich mit der Schwenkbewegung des Betätigungsarmes bewegt, und einen Kassetten-Positionierungshebel umfasst. Der Kassetten-Positionierungshebel ist schwenkbar im Chassis des Tonbandgerätes vorgesehen und dazu eingerichtet, eine Schwenkbewegung auszulösen, um eine Positionierungstätigkeit der Kassette durchzuführen. Es handelt sich hier jedoch nicht um eine Vorrichtung zum Verstellen eines Wickelkernniederhalters. Erwähnt wird weiterhin die US Patentschrift 3 869 099, aus welcher ein Gerät mit einem Kassettenhalter für eine einseitig benutzbare Kassette bekannt ist. Nach dem Einschieben der Kassette wird der Kassettenhalter in die Richtung des Chassis des Gerätes verschoben zum Positionieren der Kassette und der in der Kassette vorgesehenen Wickelkerne. Zum Schluss wird noch hingewiesen auf die DE Offenlegungsschrift 3 019 570, in welcher ein Kassettenträger mit Führungsmitteln zum Einbringen einer Kassette in ein Kassettengerät gezeigt wird. Der Kassettenträger liegt in der Ladeposition in einem Winkel bezüglich des Chassis des Gerätes. Wenn die Kassette eingeschoben wird, verschiebt sich der Träger anfänglich in einer Schräglage und wird danach in die Horizontalstellung gedreht zum Positionieren der Kassette. Von einem Wickelkernniederhalter ist hier keine Rede.

Als vorteilhaft hat sich erwiesen, wenn der Betätigungsteil durch einen in Richtung des Einführweges der Kassette an der Kassettenaufnahme verstellbar geführten Schieber gebildet ist, an dem die Rückstellfeder angreift und der einen Betätigungsanschlag aufweist, der zum kraftschlüssigen Zusammenwirken mit einem am Trägerteil vorgesehenen Gegenanschlag ausgebildet ist und der bei in seiner Ruhelage sich befindendem Trägerteil mit Abstand zum Gegenanschlag liegt, wobei beim Einführen der Kassette nach einem ersten Teilhub des von der Kassette mitgenommenen Schiebers der Betätigungsanschlag am Gegenanschlag zur Anlage kommt und daran anschliessend beim weiteren Hub des Schiebers über den Gegenanschlag den Trägerteil von seiner Ruhelage in seine Wirklage verstellt. Weil der Schieber nur in Richtung des Einführweges verstellbar ist, tritt beim Einführen bzw. beim Herausführen der Kassette längs dieses Einführweges zwischen derselben und dem Schieber keine Relativbewegung auf, was im Hinblick auf ein schonendes Zusammenwirken vorteilhaft ist. Dadurch, dass der Betätigungsanschlag des Schiebers mit einem dem ersten Teilhub entsprechenden Abstand vom Gegenanschlag des Trägerteiles liegt, wenn sich der Trägerteil in seiner Ruhelage befindet, ist erreicht, dass beim Herausführen der Kassette aus der Kassettenaufnahme durch die Rückstellfeder, nachdem der Trägerteil bereits seine Ruhelage erreicht hat, der Schieber noch um den dem ersten Teilhub entsprechenden Abstand weiterverstellt wird, was ein dementsprechend weiteres Herausführen der Kassette aus der Kassettenaufnahme zur Folge hat. Dies ist besonders vorteilhaft, da eine relativ weit aus der Kassettenaufnahme herausgeführte Kassette leicht und sicher ergriffen und aus dem Gerät entnommen werden kann.

Im Hinblick auf eine sichere Vermeidung einer Fehlbedienung hat sich als vorteilhaft erwiesen, wenn der Schieber eine in Richtung des Einführweges der Kassette verlaufende Sperrfläche und der Trägerteil einen quer zur Sperrfläche verlaufenden Sperranschlag aufweist, der bei in seiner Ruhelage sich befindendem Trägerteil der Sperrfläche gegenüberliegt und dabei eine Verstellung des Trägerteiles in seine Wirklage sperrt, wobei beim Einführen der Kassette nach dem ersten Teilhub der Verstellung des Schiebers die Sperrfläche den Sperranschlag am Trägerteil zur Verstellung desselben von seiner Ruhelage in seine Wirklage freigibt. Hierdurch ist auf besonders einfache Weise sichergestellt, dass der Trägerteil nur beim Einführen einer Kassette in die Kassettenaufnahme von seiner Ruhelage in seine Wirklage verstellbar ist und der Wickelkernniederhalter nicht ungewollt in den Einführweg der Kassette gelangen kann, womit Beschädigungen der Kassette und des Gerätes sicher vermieden sind.

Zum Verstellen des Trägerteiles von seiner Wirklage in seine Ruhelage beim Herausführen der Kassette aus der Kassettenaufnahme kann eine dementsprechend am Trägerteil angreifende separate Verstellfeder vorgesehen sein. Als vorteilhaft hat sich erwiesen, wenn der Schieber eine quer zur Richtung des Einführweges der Kassette verlaufende Mitnehmerfläche und der Trägerteil einen quer zur Mitnehmerfläche verlaufenden Mitnehmeranschlag aufweist, an den bei der Verstellung des Schiebers durch die an ihm angreifende Rückstellfeder entgegen der Richtung des Einführweges und ausserhalb seiner Ruhelage sich befindendem Trägerteil beim Herausführen der Kassette aus der Kassettenaufnahme die Mitnehmerfläche von der Rückstellfeder zum Verstellen des Trägerteiles von seiner Wirklage in seine Ruhelage angelegt gehalten ist und der nach dem Erreichen der Ruhelage des Trägerteiles die Mitnehmerfläche zur weiteren Verstellung des Schiebers durch die Rückstellfeder zum Herausführen der Kassette aus der Kassettenaufnahme freigibt. Hierdurch ist auf einfache Weise erreicht, dass beim Herausführen der Kassette aus der Kassettenaufnahme der unter der Wirkung der Rückstellfeder entgegen der Richtung des Einführweges der Kassette sich verstellende Schieber auch für die Verstellung des Trägerteiles von seiner Wirklage in seine Ruhelage sorgt und dass erst dann, wenn der Trägerteil seine Ruhelage eingenommen hat, der Schieber zum weiteren Herausführen der Kassette aus der Kassettenaufnahme vom Trägerteil freigegeben wird.

Als vorteilhaft hat sich dabei ferner erwiesen, wenn der Sperranschlag und der Mitnehmeranschlag gemeinsam an einem Fortsatz des Trägerteiles vorgesehen sind und die Sperrfläche und die Mitnehmerfläche durch zwei im wesentlichen senkrecht zueinander verlaufende Stirnflächen eines plattenförmig ausgebildeten Schiebers gebildet sind. Hierdurch ist eine besonders einfache und kompakte Ausbildung erreicht.

Als vorteilhaft hat sich auch erwiesen, wenn der Betätigungsteil und der Trägerteil zu einem Bauteil vereinigt sind. Auf diese Weise ist eine besonders einfache Ausbildung erreicht. Der Bauteil kann sowohl durch einen Hebel als auch durch einen Schieber gebildet sein.

Als vorteilhaft hat sich ferner erwiesen, wenn mindestens eine durch die Betätigung eines Auslöseelementes lösbare Verriegelungseinrichtung vorgesehen ist, die nach dem Verstellen des Trägerteiles von seiner Ruhelage in seine Wirklage beim Einführen der Kassette zumindest den beim Einführen von der Kassette mitgenommenen Betätigungsteil entgegen der Kraft der Rückstellfeder in seiner verstellten Lage festhält und die nach dem Lösen derselben die Verstellung des Trägerteiles in seine Ruhelage und die Verstellung des Betätigungsteiles durch die Rückstellfeder zum Herausführen der Kassette aus der Kassettenaufnahme freigibt. Hierdurch ist auf einfache Weise erreicht, dass die Verriegelungseinrichtung bei in die Kassettenaufnahme eingesetzter Kassette die Kraft der Rückstellfeder aufnimmt, so dass die Kassette von der Rückstellfeder nicht belastet ist und nach ihrer Verstellung in die Betriebslage von der Rückstellfeder unbelastet und unbehindert genau positioniert werden kann.

Die Verriegelungseinrichtung kann beispielsweise zwischen der Kassettenaufnahme und dem Betätigungsteil wirksam sein. Als besonders vorteilhaft hat sich erwiesen, wenn die Verriegelungseinrichtung am Trägerteil angreift und diesen in seiner Wirklage festhält, wobei der Betätigungsteil über den mit der Verriegelungseinrichtung in seiner Wirklage festgehaltenen Trägerteil entgegen der Kraft der Rückstellfeder in seiner verstellten Lage festgehalten ist. Hierdurch ist auf besonders einfache Weise erreicht, dass die Verriegelungseinrichtung nicht nur die Kraft der Rückstellfeder aufnimmt, sondern zusätzlich auch dafür sorgt, dass der Trägerteil sicher in seiner Wirklage festgehalten ist. Damit ist stets ein sicheres und einwandfreies Zusammenwirken des am Trägerteil angebrachten Wickelkernniederhalters mit dem Wickelkern gewährleistet.

Im Hinblick auf die Ausbildung des Trägerteiles hat sich als vorteilhaft erwiesen, wenn der Trägerteil durch einem um eine parallel zu den Hauptwänden der eingeführten Kassette verlaufende Schwenkachse verschwenkbaren Winkelhebel gebildet ist, dessen im wesentlichen parallel zu den Hauptwänden der eingeführten Kassette verlaufender einer Schenkel den Wickelkernniederhalter trägt und über dessen anderen Schenkel der Winkelhebel mit seinem den Wickelkernniederhalter tragenden Schenkel im wesentlichen quer zu den Hauptwänden der eingeführten Kassette vom Betätigungsteil verstellbar ist. Auf diese Weise ist eine einfache Ausbildung für den Trägerteil und dessen Lagerung an der Kassettenaufnahme erreicht.

Als vorteilhaft hat sich aber auch erwiesen, wenn der Trägerteil durch einen in Richtung der Einführweges der Kassette gesehen, U-förmigen Bügel gebildet ist, dessen Stegwand im wesentlichen parallel zu den Hauptwänden der eingeführten Kassette verläuft und den Wickelkernniederhalter trägt und mit dessen beiden senkrecht zur Stegwand abgewinkelten Seitenwänden der Bügel zumindest quer zu den Hauptwänden der eingeführten Kassette an der Kassettenaufnahme verstellbar gehalten ist. Hierdurch ist eine sehr stabile Ausbildung für den Trägerteil erreicht.

Der Bügel kann beispielsweise mit einer Welle an der Kassettenaufnahme verschwenkbar gelagert sein. Als vorteilhaft hat sich aber erwiesen, wenn zum verstellbaren Halten des Bügels and der Kassettenaufnahme zwischen dieser und jeder Seitenwand des Bügels eine Kulissensteuereinrichtung vorgesehen ist, die mindestens eine Kulissenfläche mit einem gegenüber der Richtung des Einführweges der Kassette geneigt verlaufenden Abschnitt aufweist, der den Bügel zusätzlich in Richtung des Einführweges der Kassette an der Kassettenaufnahme verstellt. Hierdurch ist auf einfache Weise erreicht, dass der Trägerteil eine zur Kassette hin gerichtete translatorische Verstellbewegung ausführt, wodurch stets ein einwandfreies und schonendes Heranführen des vom Trägerteil getragenen Wickelkernniederhalters an den in der Kassette untergebrachten Wickelkern gewährleistet ist.

Dabei hat es sich als vorteilhaft erwiesen, wenn die Verriegelungseinrichtung beim weiteren Verstellen des als Trägerteil vorgesehenen Bügels aus seiner Wirklage in Richtung des Einführweges der Kassette durch weiteres Verstellen der hierbei das Auslöseelement bildenden Kassette in Richtung des Einführweges selbsttätig lösbar ist. Auf diese Weise ist eine einfache Bedienung erreicht, da zum Lösen der Verriegelungseinrichtung lediglich die hierbei das Auslöseelement bildente Kassette von Hand aus kurz in Richtung des Einführweges verstellt zu werden braucht und daher kein separates Auslöseelement zum Lösen der Verriegelungseinrichtung notwendig ist, was zusätzlich im Hinblick auf eine einfache Ausbildung vorteilhaft ist.

Für solche selbsttätig lösbare Verriegelungseinrichtungen gibt es eine Reihe von bekannten Konstruktionen, beispielsweise steuerbare Fortschaltklinken, wie die sogenannten Schadow-Klinken. Als vorteilhaft hat sich aber auch erwiesen, wenn die Verriegelungseinrichtung einen quer zur Richtung des Einführweges der Kassette verstellbaren Verriegelungsstift aufweist, der in eine in sich geschlossene, im wesentlichen herzförmige Kulissenbahn ragt, die beim Einführen der Kassette und dabei von der Kassette zusätzlich in Richtung des Einführweges mitgenommenen Bügel den Verriegelungsstift von einer im Bereich der Herzspitze liegenden Ausgangsstellung in der Kulissenbahn in eine im Bereich des Herzeinschnitts liegende Verriegelungsstellung in der Kulissenbahn leitet, in der der Verriegelungsstift über die Kulissenbahn zumindest den beim Einführen der Kassette mitgenommenen Betätigungsteil entgegen der Kraft der Rückstellfeder in seiner verstellten Lage festhält und aus der zum Lösen der Verriegelungseinrichtung der Verriegelungsstift beim weiteren Verstellen des Bügels aus seiner Wirklage in Richtung des Einführweges der Kassette von der Kulissenbahn selbst wieder herausführbar ist, wobei nach dem Lösen der Verriegelungseinrichtung beim Verstellen des Bügels durch die Rückstellfeder entgegen der Richtung des Einführweges die Kulissenbahn den aus der Verriegelungsstellung herausgeführten Verriegelungsstift in seine Ausgangsstellung zurückleitet. Eine solche an sich ebenfalls bekannte Verriegelungseinrichtung ergibt bei einem einfachen und raumsparenden Aufbau eine sehr sichere Funktionsweise.

Es gibt bekanntlich Kassetten mit einem beim Einführen derselben in die Kassettenaufnahme entgegen der Kraft einer Schliessfeder verstellbaren Kassettenverschluss. Eine solche Kassette ist beispielsweise auch aus der eingangs zitierten AT-PS-365 367 bekannt. Bei einem erfindungsgemässen Gerät für eine solche Kassette hat es sich als vorteilhaft erwiesen, wenn am verstellbaren Trägerteil für den Wickelkernniederhalter zusätzlich eine Festhalteeinrichtung zum Festhalten der in die in ihrer Ladeposition sich befindende Kassettenaufnahme eingeführten, von der Schliessfeder entgegen der Richtung des Einführweges belasteten Kassette angebracht ist. Auf diese Weise ist die von der Schliessfeder im Sinne ihres Herausführens aus der Kassettenaufnahme belastete Kassette bei in seiner Wirklage sich befindendem Trägerteil sicher in der Kassettenaufnahme festgehalten, wobei auch verhindert ist, dass die Schliessfeder die Kassette in unerwünschter Weise gegen den bereits an den Wickelkern herangeführten Wickelkernniederhalter drückt, was eine Beeinträchtigung seiner Funktion und sogar eine Beschädigung desselben zur Folge haben könnte. Dadurch, dass die Festhalteeinrichtung am Trägerteil für den Wickelkernniederhalter angebracht ist, ist ein einfacher Aufbau erreicht und erfolgt das Heranführen des Wickelkernniederhalters zum Wickelkern und der Festhalteeinrichtung zur Kassette vorteilhafterweise in einem einzigen Vorgang.

Als besonders vorteilhaft hat sich dabei erwiesen, wenn die Festhalteeinrichtung durch mindestens einen am Trägerteil befestigten, senkrecht zu den Hauptwänden der eingeführten Kassette verlaufenden Stift gebildet ist, der bei der Verstellung des Trägerteiles von seiner Ruhelage in seine Wirklage mit der Kassette in Wirkverbindung tritt.

Die Erfindung wird im folgenden an Hand von zwei in den Zeichnungen dargestellten Ausführungsbeispielen, auf welche sie jedoch nicht beschränkt sein soll, näher beschrieben.

Die Figur 1 zeigt schematisch in Draufsicht eine Kassette mit zwei nebeneinander liegenden Wickelkernen und einem entgegen der Kraft einer Schliessfeder aus einer dargestellten Schliessstellung verstellbaren Kassettenverschluss.

Die Figur 2 zeigt schematisch in einer Seitenansicht die Kassette gemäss Fig. 1.

Die Figur 3 zeigt in einer teilweise im Schnitt dargestellten Seitenansicht ein Aufzeichnungs- und/oder Wiedergabegerät gemäss einem ersten Ausführungsbeispiel für eine Kassette nach den Fig. 1 und 2 mit einer verstellbaren Kassettenaufnahme, an der ein durch einen U-förmigen Bügel gebildeter, verstellbarer Trägerteil für zwei Wickelkernniederhalter vorgesehen ist, wobei die Kassettenaufnahme in ihrer Ladeposition und der Bügel bei ausserhalb der Kassettenaufnahme sich befindender Kassette in seiner Ruhelage dargestellt ist.

Die Figur 4 zeigt analog wie Fig. 3 dieses Gerät, wobei die Kassette in die in ihrer Ladeposition sich befindende Kassettenaufnahme eingeführt und der U-förmige Bügel in seine Wirklage verstellt ist.

Die Figur 5 zeigt eine Draufsicht auf das Gerät gemäss Fig. 4.

Die Figur 6 zeigt analog wie die Fig. 3 und 4 dieses Gerät, wobei die Kassettenaufnahme in ihre Arbeitsposition verstellt ist.

Die Figur 7 zeigt schematisch im Schnitt ein Aufzeichnungs- und/oder Wiedergabegerät gemäss einem zweiten Ausführungsbeispiel für eine nur einen Wickelkern enthaltende Kassette mit in ihrer Ladeposition sich befindender, verstellbarer Kassettenaufnahme, an der ein durch einen Winkelhebel gebildeter, verstellbarer Trägerteil für einen Wickelkernniederhalter vorgesehen ist, der bei ausserhalb der Kassettenaufnahme sich befindender Kassette seine Ruhelage einnimmt.

Die Figur 8 zeigt analog wie Fig. 7 dieses Gerät mit in ihrer Arbeitsposition sich befindender, eine eingeführte Kassette enthaltender Kassettenaufnahme und in seine Wirklage verstelltem Winkelhebel.

Die Figur 9 zeigt in einem Schnitt längs der Linie IX-IX in Fig. 8 die Kassettenaufnahme dieses Gerätes.

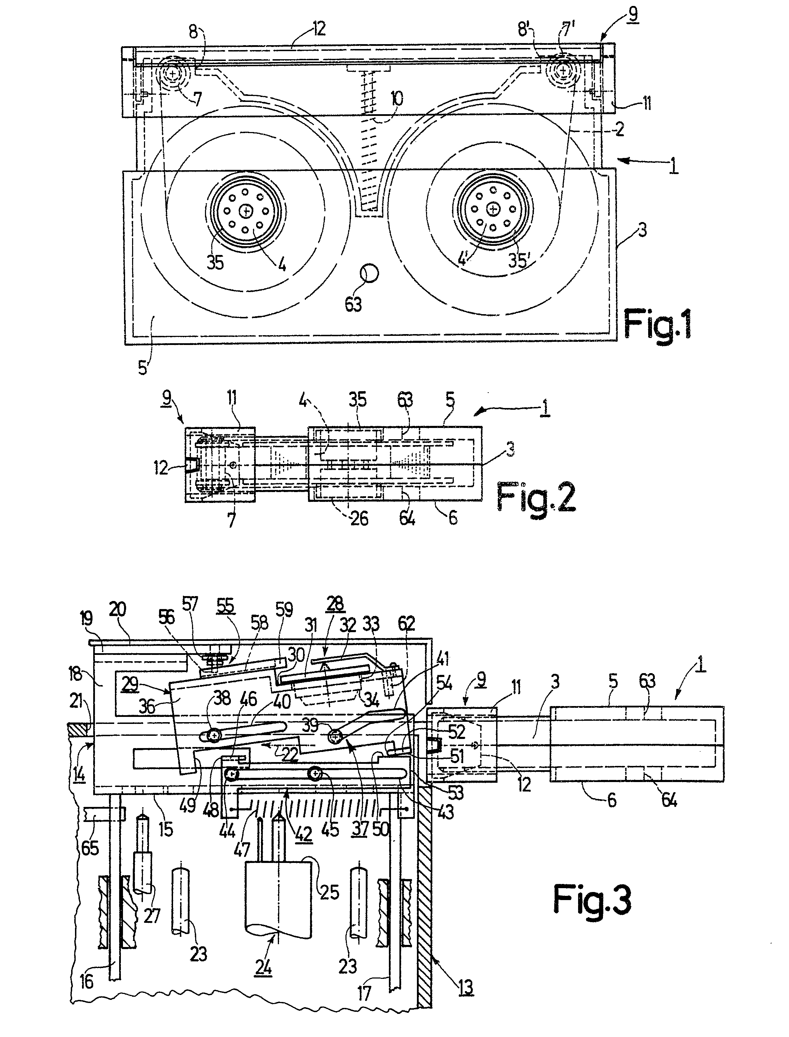

In den Fig. 1 und 2 ist eine Kassette 1 dargestellt, die zum Aufwickeln eines in derselben untergebrachten bandförmigen Aufzeichnungsträgers 2 zwei im Kassettengehäuse 3 nebeneinander liegende, rotierend antreibbare Wickelkerne 4 und 4' enthält, die zur Bildung von Spulen mit Flanschen versehen sind. Die Wickelkerne 4 und 4' sind durch jede der beiden zueinander parallelen Hauptwände 5 und 6 der Kassette 1 in axialer Richtung von entgegengesetzten Seiten her zugänglich, wofür in jeder Hauptwand konzentrisch zu den Wickelkernen liegende Öffnungen vorgesehen sind. Die Kassette ist als wendbare Kassette ausgebildet, so dass dieselbe in zwei zueinander gewendeten Lagen verwendbar ist.

Der Aufzeichnungsträger 2 ist innerhalb der Kassette 1 von dem einen Wickelkern 4 über eine erste Umlenkrolle 7 und von dieser durch eine erste Öffnung 8 im Kassettengehäuse 3 aus demselben und danach durch eine zweite Öffnung 8' wieder in dasselbe zu einer zweiten Umlenkrolle 7' und von dieser zu dem anderen Wickelkern 4' geführt. Zum Schutz des ausserhalb des Kassettengehäuses 3 verlaufenden Abschnittes des Aufzeichnungsträgers 2 weist die Kassette 1 einen verstellbaren Kassettenverschluss 9 auf, der zweiteilig ausgebildet ist und aus einem am Kassettengehäuse 3 entgegen der Kraft einer Schliessfeder 10 aus einer in den Fig. 1 und 2 dargestellten Schliessstellung in eine Offenstellung verschiebbaren Verschlussschieber 11 und aus einer am Kassettengehäuse 3 schwenkbar gelagerten Verschlussklappe 12 besteht. Die Verschlussklappe 12 ist bei in seiner Schliessstellung befindlichem Verschlussschieber 11 von diesem ebenfalls in einer Schliessstellung gehalten, aus welcher die Verschlussklappe 12 bei in seine Offenstellung verschobenem Verschlussschieber 11 in entgegengesetzten Richtungen zur Freigabe des erwähnten Abschnittes des Aufzeichnungsträgers 2 in zwei Offenstellungen verschwenkbar ist. Bei geöffnetem Kassettenverschluss 9 kann bei in ein hierfür ausgebildetes Aufzeichnungs- und/oder Wiedergabegerät eingeführter Kassette 1 der ausserhalb des Kassettengehäuses 3 verlaufende Abschnitt des Aufzeichnungsträgers 2 zur Abtastung desselben, um eine Aufzeichnung und/oder Wiedergabe von Signalen durchzuführen, mit im Gerät vorgesehenen Abtastelementen in Wirkverbindung gebracht werden. Dies erfolgt vorzugsweise durch Herausführen des Aufzeichnungsträgers aus der Kassette und Herumführen desselben um die Abtastelemente ; es können aber auch Abtastelemente in die geöffnete Kassette eingeführt werden. Es sei noch erwähnt, dass eine solche Kassette bekannt ist und beispielsweise in der eingangs zitierten AT-PS-365 367 beschrieben ist.

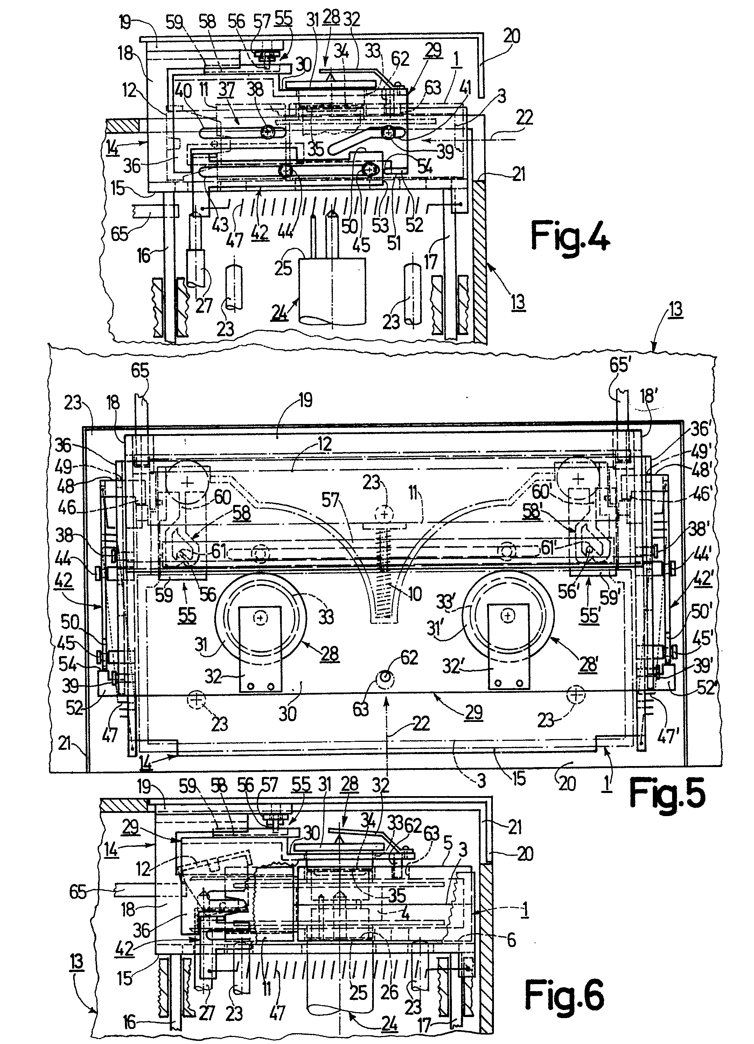

In den Fig. 3 bis 6 ist ein Aufzeichnungs- und/oder Wiedergabegerät 13 dargestellt, das zum Zusammenwirken mit einer Kassette 1 gemäss den Fig. 1 und 2 ausgebildet ist. Das Gerät 13 weist zum Aufnehmen der Kassette 1 eine verstellbare Kassettenaufnahme 14 auf, die zwischen einer in den Fig. 3, 4 und 5 dargestellten Ladeposition und einer in Fig. 6 dargestellten Arbeitsposition verschiebbar ist. Die Kassettenaufnahme 14 ist im wesentlichen als U-förmige Wanne ausgebildet und mit Hilfe von an der Bodenwand 15 derselben angebrachten Führungsleisten 16 und 17 senkrecht zur Bodenwand 15 zwischen der Ladeposition und der Arbeitsposition verschiebbar geführt. Da es für die vorliegende Erfindung unwesentlich ist, auf welche Weise die Verstellung der Kassettenaufnahme erfolgt, ist dies in den Figuren der Einfachheit halber nicht dargestellt ; die Verstellung kann beispielsweise motorisch mit Hilfe eines separaten Verstellmotors für die Kassettenaufnahme erfolgen, es ist selbstverständlich aber auch eine manuelle Verstellung möglich. Die Seitenwände 18 und 18' der Kassettenaufnahme sind an ihren freien Enden zueinander hin abgewinkelt ausgebildet und tragen in diesem Bereich einen Steg 19, an dem ein aus durchsichtigem Material bestehender Deckel 20 für die Kassettenaufnahme 14 angebracht ist. Der Deckel 20 ist dabei so ausgebildet, dass er die Kassettenaufnahme 14 abdeckt und bei in ihrer Arbeitsposition sich befindender Kassettenaufnahme eine Öffnung 21 im Gerät 13, durch die hindurch sich die Kassettenaufnahme bei ihrer Verstellung zwischen Ladeposition und Arbeitsposition bewegt, verschliesst, wie dies aus Fig. 6 ersichtlich ist.

Bei in ihrer Ladeposition sich befindender Kassettenaufnahme 14 ist die mit ihren Hauptwänden 5 und 6 parallel zu einem vorgegebenen Einführweg ausgerichtete Kassette 1 längs dieses Einführweges in dieselbe einführbar, wobei die Kassette entlang der Bodenwand 15 der Kassettenaufnahme 14 gleitet und von den Seitenwänden 18, 18' derselben geleitet wird. In den Fig. 3, 4 und 5 ist dieser Einführweg für die hierbei nur schematisch dargestellte Kassette mit einem strichpunktierten Pfeil 22 angedeutet. Nach dem vollständigen Einführen der Kassette in die Kassettenaufnahme 14 wird diese durch entsprechendes Verstellen derselben von der in den Fig. 3, 4 und 5 dargestellten Ladeposition in die in Fig. 6 dargestellte Arbeitsposition gebracht. Bei dieser Verstellung der Kassettenaufnahme in ihre Arbeitsposition treten durch Öffnungen in der Bodenwand 15 derselben hindurch drei Positionieranschläge 23 für die Kassette 1 mit derselben in Wirkverbindung und halten bei in ihre Arbeitsposition sich befindender Kassettenaufnahme die Kassette 1 in einer Betriebslage im Gerät, in der die Kassette 1 geringfügig von der Bodenwand 15 der Kassettenaufnahme 14 abgehoben ist, wie dies aus Fig. 6 ersichtlich ist. Ausserdem treten bei dieser Verstellung der Kassettenaufnahme durch zwei weitere Öffnungen in der Bodenwand 15 derselben zwei geräteseitige, rotierend antreibbare Wickeldorne 24 und 24' durch die denselben zugewandte Hauptwand 6 der Kassette 1 hindurch mit den Wickelkernen 4 und 4' in Wirkverbindung, um die Wickelkerne 4, 4' antreiben zu können. Die Wickeldorne 24, 24' stossen dabei mit einer Stützfläche 25, 25' gegen eine im Bereich der Hauptwand 6 liegende Stirnfläche 26, 26' der Wickelkerne 4, 4', wie Fig. 6 zeigt, und legen dabei die Lage der Wickelkerne in axialer Richtung derselben fest. Ferner treten bei der Verstellung der Kassettenaufnahme 14 in ihre Arbeitsposition durch weitere Öffnungen in der Bodenwand 15 hindurch mit den Umlenkrollen 7 und 7' in der Kassette geräteseitige Positionierstifte 27, 27' in Wirkverbindung, um auch die Lage der Umlenkrollen 7 und 7' vom Gerät her genau festzulegen; dies ist der Deutlichkeit der Zeichnung halber aber in Fig. 6 nicht dargestellt. An dieser Stelle sei noch erwähnt, dass an der Kassettenaufnahme zusätzlich auch noch mindestens ein Kassettenniederhalter vorgesehen sein kann, der die Kassette bei in ihrer Ladeposition befindlicher Kassettenaufnahme gegen die Bodenwand derselben drückt und der die Kassette bei in ihrer Arbeitslage befindlicher Kassettenaufnahme gegen die Positionieranschläge 23 zur Festlegung der Betriebslage der Kassette drückt. Der Kassettenniederhalter kann in bekannter Weise durch eine entsprechend ausgebildete Blattfeder oder auch durch einen federbelasteten, an der Kassettenaufnahme schwenkbar gelagerten Hebel gebildet sein. Im vorliegenden Fall ist der Einfachheit und Deutlichkeit der Zeichnung halber kein solcher Kassettenniederhalter dargestellt.

Um die Wickelkerne 4, 4' bei in ihrer Betriebslage sich befindender Kassette 1 sicher mit ihren im Bereich der Hauptwand 6 liegenden Stirnflächen 26, 26' gegen die Stützflächen 25, 25' der Wickeldorne 24, 24' zu halten, so dass die Wickelkerne stets eine vorgegebene Relativlage zu den Wickeldornen einnehmen, was für ein einwandfreies und gleichmässiges Auf- bzw. Abwickeln des Aufzeichnungsträgers 2 auf bzw. von den Wickelkernen wesentlich ist, sind an der Kassettenaufnahme 14 zwei Wickelkernniederhalter 28 und 28' vorgesehen, die durch die von den Wickeldornen 24, 24' abgewandte Hauptwand 5 der Kassette 1 mit den Wickelkernen 4, 4' in Wirkverbindung bringbar sind. Die beiden Wickelkernniederhalter 28, 28' sind dabei auf einem und der Kassettenaufnahme 14 vorgesehen, mit einem die Wickelkernniederhalter tragenden Abschnitt im wesentlichen parallel zu den Hauptwänden 5 und 6 der eingeführten Kassette 1 verlaufenden, zumindest quer zu den Hauptwänden verstellbaren Trägerteil angebracht. Der Trägerteil ist durch einen in Richtung des Einführweges 22 der Kassette 1 gesehen U-förmigen Bügel 29 gebildet. Die abgestuft ausgebildete Stegwand 30 des Bügels 29 verläuft im wesentlichen parallel zu den Hauptwänden 5 und 6 der Kassette 1 und trägt die beiden Wickelkernniederhalter 28, 28'. Die Wickelkernniederhalter weisen je eine rotationssymmetrische Kappe 31, 31' auf, die unter der Wirkung einer Blattfeder 32, 32' am Bügel 29 festgehalten sind und die durch Bohrungen 33, 33' in der Stegwand 30 des Bügels 29 hindurchgeführt sind, um mit ihren eine Druckfläche 34, 34' aufweisenden freien Enden mit den im Bereich der Hauptwand 5 liegenden Stirnflächen 35, 35' der Wickelkerne 4, 4' zusammenwirken zu können.

Der Bügel 29 ist mit seinen beiden senkrecht zur Stegwand 30 abgewinkelten Seitenwänden 36, 36' zumindest quer zu den Hauptwänden 5 und 6 der in die Kassettenaufnahme eingeführten Kassette an der Kassettenaufnahme verstellbar gehalten. Der Bügel 29 ist dabei zwischen einer in Fig. 3 dargestellten Ruhelage, in der die Wickelkernniederhalter 28, 28' ausserhalb des Einführweges der Kassette liegen, so dass eine Beschädigung der Wickelkernniederhalter beim Einführen der Kassette ausgeschlossen ist und die Wickelkernniederhalter das Einführen der Kassette nicht behindern, und einer in den Fig. 4, 5 und 6 dargestellten Wirklage, in der die Wickelkernniederhalter an die Wickelkerne herangeführt sind, an der Kassettenaufnahme verstellbar gehalten. Zum verstellbaren Halten des Bügels 29 an der Kassettenaufnahme 14 ist zwischen dieser und jeder Seitenwand 36, 36' des Bügels 29 eine Kulissensteuereinrichtung 37, 37' vorgesehen. Jede Kulissensteuereinrichtung weist dabei zwei an den Seitenwänden 18, 18' der Kassettenaufnahme 14 drehbar gelagerte Rollen 38, 38' und 39, 39' auf, die durch je einen an den Seitenwänden 36, 36' des Bügels 29 vorgesehen, als Kulissenfläche dienenden Kulissenschlitz 40, 40' und 41, 41' hindurchgeführt sind. Die Kulissenschlitze der Kulissensteuereinrichtungen 37, 37' sind dabei so ausgebildet, dass der Bügel bei seiner Verstellung zwischen seiner Ruhelage und seiner Wirklage sowohl quer zu den Hauptwänden der eingeführten Kassette als auch zusätzlich in Richtung des Einführweges der Kassette verstellt wird. Hierdurch kann sich der Bügel beim Einführen der Kassette mit derselben translatorisch mitbewegen, wobei die Wickelkernniederhalter mit einer stetigen und gleichmässigen Verstellbewegung auf schonende Weise an die Wickelkerne herangeführt werden. Die zur Kassette hin gerichtete translatorische Verstellbewegung wird auf einfache Weise dadurch erreicht, dass die Kulissenschlitze 41, 41' einen gegenüber der Richtung des Einführweges der Kassette geneigt verlaufenden Abschnitt aufweisen. Selbstverständlich könnten auch die Kulissenschlitze 40, 40' einen solchen gegenüber der Richtung des Einführweges geneigt verlaufenden Abschnitt aufweisen.

Zur Verstellung des als Trägerteil vorgesehenen Bügels 29 sind an der Kassettenaufnahme zwei gegenüber derselben verstellbare, spiegelbildlich zueinander an der Kassettenaufnahme 14 angeordnete Betätigungsteile vorgesehen. Jeder Betätigungsteil ist durch einen plattenförmig ausgebildeten Schieber 42, 42' gebildet, der mit je zwei an den Seitenwänden 18, 18' der Kassettenaufnahme 14 drehbar gelagerten, durch einen Führungsschlitz 43, 43' im Schieber 42, 42' hindurchragenden Rollen 44, 44' und 45, 45' in Richtung des Einführweges 22 der Kassette 1 an der Kassettenaufnahme 14 verstellbar geführt ist. Jeder Schieber 42, 42' ragt mit einem von demselben abgewinkelten Lappen 46, 46' in den Einführweg der Kassette, wobei beim Einführen der Kassette diese gegen die Lappen 46, 46' stösst und die Schieber 42, 42' entgegen der Kraft je einer an den Schiebern angreifenden Rückstellfeder 47, 47' in Richtung des Einführweges mitnimmt. Die Schieber und die Kassette führen dabei die gleiche lineare Schiebebewegung aus, so dass keine Relativbewegung zwischen Schiebern und Kassette auftritt, was ein schonendes Zusammenwirken zwischen Schiebern und Kassette zur Folge hat.

Jeder Schieber weist einen durch eine Stirnfläche seines Lappens 46, 46' gebildeten Betätigungsanschlag 48, 48' auf, der zum kraftschlüssigen Zusammenwirken mit einem am Bügel 29 vorgesehenen, durch eine Stirnfläche jeder Seitenwand 36, 36' des Bügels gebildeten Gegenanschlag 49, 49' ausgebildet ist. Der Betätigungsanschlag 48, 48' liegt, wie Fig. 3 zeigt, bei in seiner Ruhelage sich befindendem Bügel 29 mit Abstand zum Gegenanschlag 49, 49'. Beim Einführen der Kassette kommen nach einem ersten Teilhub der von der Kassette mitgenommenen Schieber die Betätigungsanschläge 48, 48' an den Gegenanschlägen 49, 49' zur Anlage und daran anschliessend beim weiteren Hub der Schieber 42, 42' verstellen die Betätigungsanschläge 48, 48' über Gegenanschläge 49, 49' den Bügel 29 von seiner Ruhelage in seine Wirklage, wobei dann die Wickelkernniederhalter an die Wickelkerne herangeführt werden. Dies erfolgt also bereits bei in ihrer Ladeposition sich befindender Kassettenaufnahme, wie auch aus Fig. 4 ersichtlich ist, so dass die Wickelkernniederhalter bereits bei in ihrer Ladeposition sich befindender Kassettenaufnahme an die Wickelkerne herangeführt sind und mit denselben zusammenwirken können. Somit erübrigt es sich, die Kassettenaufnahme beim Verstellen derselben in ihre Arbeitslage eine zusätzliche Verstellbewegung zu erteilen, um durch diese die Wickelkernniederhalter an die Wickelkerne heranzuführen. Dadurch reicht eine kleine Verstellbewegung für die Kassettenaufnahme aus, so dass die Geräteabmessungen klein gehalten werden können.

Um ein ungewolltes Verstellen des Bügels 29 auf einfache Weise zu unterbinden, weist jeder Schieber 42, 42' eine durch eine in Richtung des Einführweges der Kassette und folglich in Verstellrichtung der Schieber verlaufende, durch eine Stirnfläche desselben gebildete Sperrfläche 50, 50' und der Bügel 29 je einem quer zur Sperrfläche 50, 50' verlaufenden Sperranschlag 51, 51' auf, der hierbei je durch eine Seitenfläche eines von den Seitenwänden 36, 36' des Bügels 29 abgewinkelten Fortsatzes 52, 52' gebildet ist. Die Sperranschläge 51, 51' liegen bei in seiner Ruhelage sich befindendem Bügel 29 den Sperrflächen 50, 50' an den Schiebern 42, 42' gegenüber und sperren dabei eine Verstellung des Bügels aus seiner Ruhelage in seine Wirklage. Auf diese Weise ist der Bügel 29 in seiner Ruhelage festgelegt. Beim Einführen der Kassette in die Kassettenaufnahme werden die Schieber 42, 42' mitgenommen und nach dem ersten Teilhub der Schieber, wobei die Betätigungsanschläge 48, 48' der Schieber an den Gegenanschlägen 49, 49' am Bügel 29 zur Anlage kommen, geben die Sperrflächen 50, 50' der Schieber die Sperranschläge 51, 51' am Bügel frei, so dass dann eine Verstellung des Bügels von seiner Ruhelage in seine Wirklage erfolgen kann. Diese Verstellung ist aber nur dann möglich, wenn eine Kassette in die Kassettenaufnahme eingeführt wird und dieselbe hierbei die Schieber mitnimmt, so dass der Bügel nicht ungewollt in den Einführweg der Kassette bringbar ist.

Um den Bügel 29 beim Herausführen der Kassette 1 aus der Kassettenaufnahme 14 auf einfache Weise und ohne separate Mittel von seiner Wirklage in seine Ruhelage zu bringen, weist jeder Schieber 42, 42' eine quer zur Richtung des Einführweges der Kassette und folglich quer zur Verstellrichtung der Schieber verlaufende, durch eine weitere Stirnfläche des Schiebers gebildete Mitnehmerfläche 53, 53' und der Bügel 29 je einen quer zur Mitnehmerfläche verlaufenden Mitnehmeranschlag 54, 54' auf, der hierbei durch eine abgerundete Stirnfläche des von den Seitenwänden 36, 36' des Bügels abgewinkelten Fortsatzes 52, 52' gebildet ist. Wie aus Fig. 4 deutlich zu ersehen ist, liegen die Mitnehmerflächen 53, 53' der Schieber 42, 42' bei in seiner Wirklage sich befindendem Bügel 29 an den Mitnehmeranschlägen 54, 54' desselben unter der Wirkung der Rückstellfedern 47, 47' an. Beim Verstellen der Schieber 42, 42' durch die an ihnen angreifenden Rückstellfedern 47, 47' entgegen der Richtung des Einführweges und bei noch ausserhalb seiner Ruhelage sich befindendem Bügel beim Herausführen der Kassette aus der Kassettenaufnahme bleiben die Mitnehmerflächen 53, 53' an den Mitnehmeranschlägen 54, 54' durch die Rückstellfedern 47, 47' angelegt gehalten, wobei dann die durch die Rückstellfedern verstellten Schieber über ihre Mitnehmerflächen und die Mitnehmeranschläge des Bügels letzteren von seiner Wirklage in seine Ruhelage verstellen. Die Verstellbewegung des Bügels bei dieser Verstellung ist selbstverständlich wieder durch die Kulissensteuereinrichtungen 37, 37' festgelegt, wobei durch die hierbei von der Kassette weg gerichtete translatorische Verstellbewegung ein schonendes Wegführen der Wickelkernniederhalter von den Wickelkernen erreicht ist. Nach dem Erreichen der Ruhelage des Bügels befinden sich die Mitnehmeranschläge des Bügels ausserhalb der Verstellwege der Schieber, wie Fig. 3 zeigt, und dann geben die Mitnehmeranschläge 54, 54' des Bügels 29 die Mitnehmerflächen 53, 53' der Schieber 42, 42' zur weiteren Verstellung durch die Rückstellfedern zum Herausführen der Kassette aus der Kassettenaufnahme frei. Durch diese weitere Verstellung der Schieber wird die Kassette besonders wet aus der Kassettenaufnahme herausgeschoben, so dass dieselbe sehr leicht und bequem ergriffen und aus der Kassettenaufnahme entnommen werden kann. Die Schieber 42, 42' können von den Rückstellfedern 47, 47' so weit verschoben werden, bis sich das betreffende Ende der Führungsschlitze 43, 43' in den Schiebern an den Rollen 44, 44' abstützen. Hierbei liegen dann wieder die Sperrflächen 50, 50' der Schieber 42, 42' den Sperranschlägen 51, 51' des Bügels 29 gegenüber und halten auf diese Weise, wie erwähnt, den Bügel in seiner Ruhelage fest, wie Fig. 3 zeigt.

Wie aus Vorstehendem bereits hervorgeht, sind sowohl die Sperranschläge 51, 51' als auch die Mitnehmeranschläge 54, 54' des Bügels 29 gemeinsam an je einem Fortsatz 52, 52' des Bügels vorgesehen und sind die Sperrflächen 50, 50' und die Mitnehmerflächen 53, 53' der Schieber 42, 42' durch zwei im wesentlichen senkrecht zueinander verlaufende Stirnflächen der plattenförmig ausgebildeten Schieber gebildet. Diese Ausbildung ist als besonder einfach und raumsparend anzusehen.

Um die nach dem Einführen der Kassette in die Kassettenaufnahme verstellten Teile in ihrer verstellten Lage festzuhalten, sind zwei durch Betätigung eines Auslöseelementes lösbare Verriegelungseinrichtungen 55, 55' vorgesehen, die nach dem Verstellen des als Trägerteil vorgesehenen Bügels 29 von seiner Ruhelage in seine Wirklage beim Einführen der Kassette in die Kassettenaufnahme zumindest die beim Einführen von der Kassette mitgenommenen, als Betätigungsteile vorgesehenen Schieber 42, 42' entgegen der Kraft der Rückstellfedern 47, 47' in ihrer verstellten Lage festhalten und die nach dem Lösen derselben durch Betätigung des Auslöseelementes die Verstellung des Bügels 29 in seine Ruhelage und die Verstellung der Schieber 42, 42' durch die Rückstellfedern zum Herausführen der Kassette aus der Kassettenaufnahme freigibt. Im vorliegenden Fall greifen die beiden Verriegelungseinrichtungen 55, 55' am Bügel 29 an und halten diesen in seiner Wirklage fest, wobei die Schieber 42, 42' über den mit den beiden Verriegelungseinrichtungen in seiner Wirklage festgehaltenen Bügel entgegen der Kraft der Rückstellfedern in ihrer verstellten Lage festgehalten sind.

Die beiden Verriegelungseinrichtungen 55, 55' weisen je einen quer zur Richtung des Einführweges der Kassette 1 in die Kassettenaufnahme 14 verstellbaren Verriegelungstift 56, 56' auf. Die Verriegelungsstifte sind auf einem an dem Steg 19 der Kassettenaufnahme 14 quer zur Richtung des Einführweges reibungsschlüssig verschiebbar geführten Verriegelungsschieber 57 angebracht. Zur Erzielung des Reibungsschlusses kann beispielsweise eine zwischen dem Verriegelungsschieber 57 und dem Steg 19 wirksame, in der Zeichnung der Einfachheit halber nicht dargestellte Blattfeder vorgesehen sein, die die beiden Teile reibungsschlüssig zueinander verspannt. Die Verriegelungsstifte 56, 56' ragen je in eine in sich geschlossene, im wesentlichen herzförmige Kulissenbahn 58, 58', die in einem an der Stegwand 30 des Bügels 29 befestigten Block 59, 59' eingeformt ist, wie dies Fig. 5 zeigt. Die Kulissenbahnen 58, 58' leiten beim Einführen der Kassette und dabei von der Kassette über die Schieber 42, 42' zusätzlich in Richtung des Einführweges mitgenommenen Bügel, was durch die Kulissensteuereinrichtungen erreicht ist, die Verriegelungsstifte 56, 56' selbsttätig von im Bereich der Herzspitzen 60, 60' liegenden Ausgangsstellungen in den Kulissenbahnen in im Bereich der Herzeinschnitte 61, 61' liegende Verriegelungsstellungen in den Kulissenbahnen, wobei durch die quer zur Richtung des Einführweges verlaufenden Begrenzungswände der Kulissenbahnen der Hub der Einführbewegung der Kassette begrenzt ist. In den in Fig. 5 dargestellten Verriegelungsstellungen der Verriegelungsstifte 56, 56' halten dieselben über die Kulissenbahnen den Bügel 29 und die beim Einführen der Kassette mitgenommenen Schieber 42, 42' entgegen der Kraft der Rückstellfedern 47, 47' in ihren verstellten Lagen fest. Der Bügel 29 ist somit auf diese Weise in seiner Wirklage sicher festgehalten, was ein einwandfreies Zusammenwirken der am Bügel 29 angebrachten Wickelkernniederhalter 28, 28' mit den Wickelkernen 4, 4' gewährleistet. Die Verriegelungseinrichtungen weisen dabei einen besonders einfachen und betriebssicheren Aufbau auf. Das Lösen der Verriegelungseinrichtungen 55, 55' erfolgt hier in besonders einfacher Weise. Wie erwähnt, ist der Bügel auch in Richtung des Einführweges der Kassette verstellbar. Dies wird zum Lösen der Verriegelungseinrichtungen ausgenützt, und zwar werden beim weiteren Verstellen des als Trägerteil vorgesehenen Bügels 29 aus seiner Wirklage weiter in Richtung des Einführweges der Kassette die Verriegelungseinrichtungen selbsttätig gelöst. Diese weitere Verstellung des Bügels wird dabei einfach durch weiteres Verstellen der hierbei das Auslöseelement bildenden Kassette 1 in Richtung des Einführweges derselben erzielt. Es erübrigt sich somit, ein separates Auslöseelement vorzusehen. Zum Lösen der Verriegelungseinrichtungen 55, 55' werden die Verriegelungsstifte 56, 56' beim weiteren Verstellen des Bügels aus seiner Wirklage in Richtung des Einführweges der Kassette von den Kulissenbahnen 58, 58' selbst wieder aus ihren in Fig. 5 dargestellten Verriegelungsstellungen herausgeführt, wobei nach dem Lösen der Verriegelungseinrichtungen 55, 55' beim Verstellen des Bügels 29 durch die Rückstellfedern 47, 47' entgegen der Richtung des Einführweges die Kulissenbahnen 58, 58' die aus den Verriegelungsstellungen herausgeführten Verriegelungsstifte 56, 56' in ihre im Bereich der Herzspitzen 60, 60' liegenden Ausgangsstellungen zurückleiten. Durch das Vorsehen der Verriegelungseinrichtungen 55, 55' ist erreicht, dass bei in die Kassettenaufnahme eingeführter Kassette die Kraft der Rückstellfedern von den Verriegelungseinrichtungen aufgenommen wird, so dass die eingeführte Kassette selbst von den Rückstellfedern unbelastet ist. Dies ist vorteilhaft, weil dadurch ein unbehindertes Positionieren der Kassette in ihrer Betriebslage bei in ihre Arbeitsposition verstellter Kassettenaufnahme gewährleistet ist und weil dadurch keine störende Kraftwirkung der Rückstellfedern auf die Wickelkernniederhalter eintreten kann.

Wie erwähnt, weist die Kassette 1 einen entgegen der Kraft einer Schliessfeder 10 verstellbaren zweiteiligen Kassettenverschluss 9 auf. Beim Einführen der Kassette 1 in die Kassettenaufnahme 14 der Gerätes 13 stösst die Kassette wie erwähnt gegen die in den Einführweg der Kassette ragenden Lappen 46, 46' der Schieber 42, 42'. Dabei wirken die Lappen 46, 46' der Schieber 42, 42' mit dem Verschlussschieber 11 des Kassettenverschlusses 9 zusammen. Dies hat zur Folge, dass beim Einführen der Kassette in die Kassettenaufnahme zuerst die Lappen 46, 46' den Verschlussschieber 11 festhalten, wodurch beim weiteren Einführen der Kassette der Verschlussschieber 11 relativ zum Kassettengehäuse 3 aus der Schliessstellung in seine Offenstellung verschoben wird, was entgegen der Wirkung der Schliessfeder 10 erfolgt. Erst wenn der Verschlussschieber 11 seine in den Fig. 4 und 5 schematisch mit strichpunktierten Linien angedeutete Offenstellung erreicht hat und gegenüber dem Kassettengehäuse nicht mehr verstellt werden kann, werden die Lappen 46, 46' der als Betätigungsteile vorgesehenen Schieber 42, 42' über den Verschlussschieber 11 von der Kassette mitgenommen und es erfolgt im weiteren die Verstellung der Schieber 42, 42' und des Bügels 29 aus seiner Ruhelage in seine Wirklage, wie dies bereits vorstehend erläutert ist.

Auf Grund der Tatsache, dass bei in die Kassettenaufnahme 14 eingeführter Kassette 1 der Verschlussschieber 11 des Kassettenverschlusses 9 entgegen der Kraft der Schliessfeder 10 in seiner Offenstellung verstellt gehalten ist, übt die Schliessfeder 10 für den Kassettenverschluss 9 auf die Kassette eine entgegen der Richtung des Einführweges gerichtete Kraft aus. Um diese Kraftwirkung aufzunehmen, ist an dem als Trägerteil für die Wickelkernniederhalter 28, 28' vorgesehenen verstellbaren Bügel 29 zusätzlich eine Festhalteeinrichtung zum Festhalten der in die in ihrer Ladeposition sich befindende Kassettenaufnahme eingeführten, von der Schliessfeder 10 entgegen der Richtung des Einführweges belasteten Kassette 1 angebracht. Die Festhalteeinrichtung ist auf besonders einfache Weise durch einen an der Stegwand 30 des Bügels 29 befestigten, senkrecht zu den Hauptwänden der eingeführten Kassette verlaufenden Stift 62 gebildet, der bei der Verstellung des Bügels von seiner Ruhelage in seine Wirklage mit der Kassette 1 in Wirkverbindung tritt und dabei in eine in der Hauptwand 5 der Kassette 1 vorgesehene Öffnung 63 eintritt. Die Kassette 1 weist an der Hauptwand 6 eine zur Öffnung 63 korrespondierende Öffnung 64 auf, die bei gewendeter Kassette mit dem als Festhalteeinrichtung vorgesehenen Stift 62 zusammenwirkt. Mit der Festhalteeinrichtung ist die Kassette entgegen der Kraft der Schliessfeder 10 des Kassettenverschlusses 9 sicher in der Kassettenaufnahme festgehalten und es ist auch verhindert, dass die Schliessfeder die Kassette gegen die bereits an die Wickelkerne herangeführten Wickelkernniederhalter drückt.

Beim Einführen der Kassette 1 in die Kassettenaufnahme 14, wird, wie erwähnt, zuerst der Verschlussschieber 11 in seine Offenstellung gebracht, wonach die Kassette über den geöffneten Verschlussschieber 11 die als Betätigungsteile vorgesehenen Schieber 42, 42' über deren in den Einführweg ragende Lappen 46, 46'' mitnimmt. Nach dem ersten Teilhub der Schieber 42, 42' kommen die Betätigungsanschläge 48, 48' mit den Gegenanschlägen 49, 49' zur Anlage und geben die Sperrflächen 50, 50' der Schieber die Verstellung des Bügels 29 frei. Im folgenden wird der Bügel 29 von den Schiebern 42, 42' von seiner Ruhelage in seine Wirklage verstellt, wobei die Kulissensteuereinrichtungen 37, 37' die Verstellbewegung des Bügels festlegen, die quer zu den Hauptwänden der eingeführten Kassette und zusätzlich in Richtung des Einführweges der Kassette verläuft. Bei dieser Verstellung werden die Verriegelungsstifte 56, 56' der Verriegelungseinrichtungen 55, 55' von ihren Ausgangsstellungen in ihre Verriegelungsstellungen gebracht, in welchen sie dann den Bügel 29 in seiner Wirklage und die Schieber 42, 42' in ihrer verstellten Lage festhalten, wobei die Verriegelungseinrichtungen 55, 55' die Kräfte der Rückstellfedern 47, 47' aufnehmen. In der Wirklage des Bügels ist der als Festhalteeinrichtung vorgesehene Stift 62 in die Öffnung 63 der Kassette eingeführt, wobei er die Kassette entgegen der Wirkung der Schliessfeder 10 für den Kassettenverschluss 9 festhält, und sind zugleich die Wickelkernniederhalter 28, 28' mit ihren Druckflächen 34, 34' an die Stirnflächen 35, 35' der Wickelkerne 4, 4' herangeführt. Die Wickelkernniederhalter nehmen somit bei noch in ihrer Ladeposition sich befindender Kassettenaufnahme bereits ihre an die Wickelkerne herangeführte Wirklage ein, wie die Fig. 4 und 5 zeigen. Beim Verstellen der Kassettenaufnahme aus ihrer Ladeposition in ihre Arbeitsposition stösst die Verschlussklappe 12 der Kassette gegen zwei schematisch dargestellte Anschläge 65, 65', wodurch die Verschlussklappe in eine in Fig. 6 angedeutete Offenstellung verschwenkt wird. Bei in ihrer Arbeitsposition sich befindender Kassettenaufnahme 14 ist, wie bereits erwähnt, die Kassette 1 in ihrer Betriebslage positioniert. Hierbei stützen sich dann, wie Fig. 6 zeigt, die im Bereich der Hauptwand 6 liegenden Stirnflächen 26, 26' der Wickelkerne 4, 4' an den Stützflächen 25, 25' der Wickeldorne 24, 24' ab und drücken die Wickelkernniederhalter 28, 28' unter der Wirkung ihrer Blattfedern 32, 32' mit ihren Druckflächen 34, 34' gegen die im Bereich der Hauptwand 5 liegenden Stirnflächen 35, 35' der Wickelkerne 4, 4', wodurch die Lage der Wickelkerne von den Wickeldornen zusammen mit den Wickelkernniederhaltern exakt festgelegt ist. Die Verstellbewegung der Kassettenaufnahme von ihrer Ladeposition in ihre Arbeitsposition dient nur zum Überführen der Kassette in ihre Betriebslage, ohne dass eine zusätzliche Verstellbewegung zum Heranführen der Wickelkernniederhalter an die Wickelkerne erforderlich ist, da die Wickelkernniederhalter bereits bei in ihrer Ladeposition sich befindender Kassettenaufnahme an die Wickelkerne herangeführt werden. Deshalb ist eine kleine Verstellbewegung für die Kassettenaufnahme ausreichend, so dass der für diese Verstellbewegung erforderliche Raumbedarf im Gerät klein ist. Dies ist im Hinblick auf möglichst kleine Geräteabmessungen von Vorteil.

Um die Kassette 1 wieder aus dem Gerät entnehmen zu können, wird zuerst die Kassettenaufnahme von der Arbeitsposition in die Ladeposition gebracht, wobei die Verschlussklappe wieder in ihre Schliessstellung zurückkehrt. Wenn nun die Kassette durch Nachdrücken auf dieselbe weiter in Richtung des Einführweges verstellt wird, dann werden die Verriegelungseinrichtungen 55, 55' selbsttätig gelöst und die Schieber verstellen mit der Kraft der Rückstellfedern über ihre Mitnehmerflächen 53, 53' und die Mitnehmeranschläge 54, 54' des Bügels 29 letzteren wieder aus seiner Wirklage in seine Ruhelage, wobei über die Lappen 46, 46' der Schieber 42, 42' die Kassette aus der Kassettenaufnahme herausgeführt wird. Dabei wird auch der Verschlussschieber 11 des Kassettenverschlusses 9 durch die Schliessfeder 10 wieder in seine Schliessstellung gebracht.

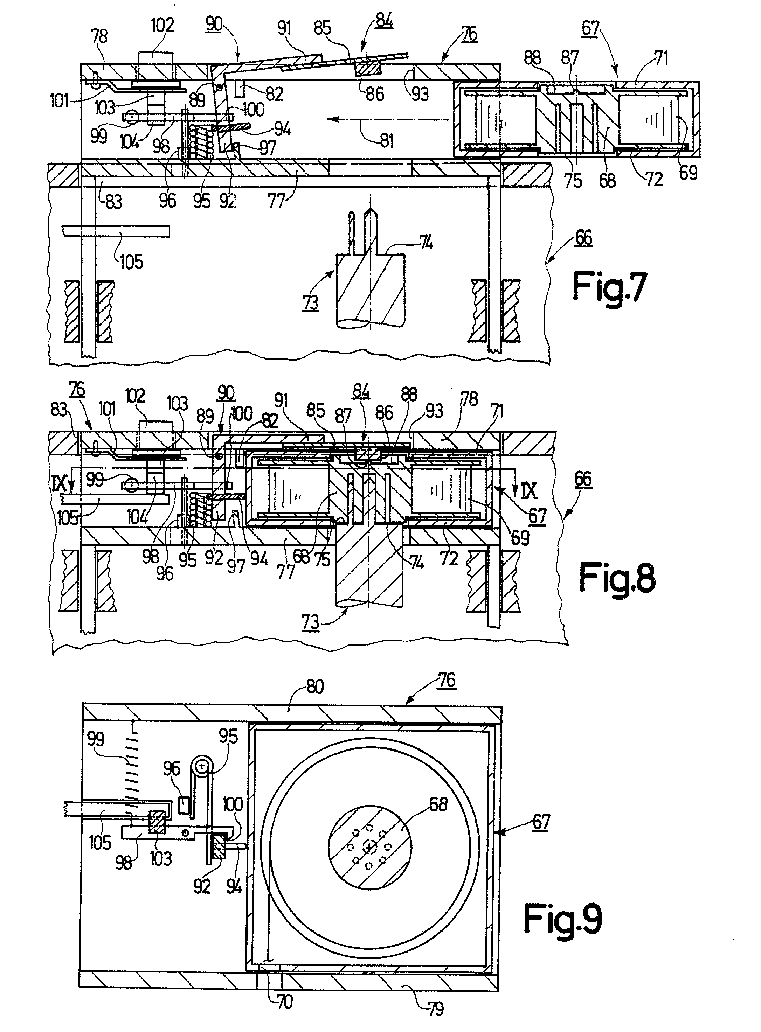

Die Fig. 7 bis 9 zeigen in schematisierter Form teilweise ein Aufzeichnungs- und/oder Wiedergabegerät 66 für eine Kassette 67, die nur einen mit Flanschen versehenen Wickelkern 68 zum Aufwickeln eines bandförmigen Aufzeichnungsträgers 69 aufweist, der zum Abtasten desselben bei in ihre Betriebslage am Gerät gebrachter Kassette 67 durch eine Öffnung 70 in einer Seitenwand der Kassette aus derselben herausführbar und über Abtastelemente zu einer geräteseitigen Aufwickelspule führbar ist. Der Wickelkern 68 ist auch bei der Kassette 67 durch jede der beiden zueinander parallelen Hauptwände 71 und 72 der Kassette 67 axial zugänglich, und zwar durch konzentrisch zum Wickelkern 68 liegende Öffnungen in den Hauptwänden der Kassette. Das Gerät weist zum Antreiben des Wickelkernes einen rotierend antreibbaren Wickeldorn 73 auf, der mit seiner Stützfläche 74 mit der im Bereich der Hauptwand 72 liegenden Stirnfläche 75 des Wickelkernes zusammenwirkt, wenn sich die Kassette in ihrer in Fig. 8 dargestellten Betriebslage befindet.

Das Gerät 66 weist eine analog wie beim Gerät nach dem Ausführungsbeispiel gemäss den Fig. 3 bis 6 verstellbar geführte, schachtförmige Kassettenaufnahme 76 auf, die eine Bodenwand 77, eine Deckwand 78 und zwei Seitenwände 79 und 80 aufweist. Die Kassettenaufnahme ist zwischen einer in Fig. 7 dargestellten Ladeposition, in der die mit ihren Hauptwänden 71 und 72 parallel zu einem vorgegebenen, mit einem strichpunktierten Pfeil 81 angegebenen Einführweg ausgerichtete Kassette 67 bis zu einem Begrenzungsanschlag 82 in die Kassettenaufnahme 67 einführbar ist, und einer in Fig. 8 dargestellten Arbeitsposition, in der die eingeführte Kassette ihre Betriebslage im Gerät einnimmt und mit dem Wickelkern 68 der geräteseitige Wickeldorn 73 durch die Bodenwand 77 und durch die dem Wickeldorn zugewandte Hauptwand 72 in Wirkverbindung steht. In der Arbeitsposition der Kassettenaufnahme schliesst dabei die Deckwand 78 der Kassettenaufnahme 76 eine Öffnung 83 ab, durch die hindurch die Kassettenaufnahme sich bei ihrer Verstellung zwischen ihrer Ladeposition und ihrer Arbeitsposition bewegt. Die Wände 77, 78, 79 und 80 der Kassettenaufnahme 76 liegen praktisch unmittelbar an den betreffenden Wänden der Kassette 67 an. Die Kassettenaufnahme weist also den Kassettendimensionen angepasste kleine Abmessungen auf, so dass dieselbe einen möglichst kleinen Raumbedarf in Anspruch nimmt. Dies ist im Hinblick auf kleine Geräteabmessungen vorteilhaft.

Die Kassettenaufnahme 76 ist mit einem Wickelkernniederhalter 84 versehen, der einfach durch ein an einer Blattfeder 85 angebrachtes Druckstück 86 gebildet ist, das durch die vom Wickeldorn 73 abgewandte Hauptwand 71 der Kassette 67 mit dem Wickelkern 78 in Wirkverbindung bringbar ist und bei in ihrer Betriebslage sich befindender Kassette 67 den Wickelkern 68 in einer vorgegebenen Relativlage zum Wickeldorn 73 hält. Dabei liegt der Wickelkernniederhalter 84 mit seinem von der Blattfeder 85 belasteten Druckstück 86, wie Fig. 8 zeigt, an einem konzentrischen Fortsatz 87 einer im Bereich der Hauptwand 71 liegenden Stirnfläche 88 des Wickelkernes 68 an.

Der Wickelkernniederhalter 84 ist an einem an der Kassettenaufnahme 76 vorgesehenen, mit einem den Wickelkernniederhalter tragenden Abschnitt im wesentlichen parallel zu den Hauptwänden 71 und 72 der eingeführten Kassette verlaufenden Trägerteil angebracht. Der Trägerteil ist im wesentlichen quer zu den Hauptwänden der eingeführten Kassette zwischen einer in Fig. 7 dargestellten Ruhelage, in der der Wickelkernniederhalter 84 ausserhalb des Einführweges der Kassette liegt, und einer Wirklage, in der der Wickelkernniederhalter 84 an den Wickelkern 68 herangeführt ist, an der Kassettenaufnahme 76 verstellbar gehalten. Der Trägerteil ist hierbei einfach durch einen um eine parallel zu den Hauptwänden der eingeführten Kassette und senkrecht zum Einführweg der Kassette verlaufende Schwenkachse 89 verschwenkbaren Winkelhebel 90 gebildet, dessen beide Schenkel 91 und 92 einen rechten Winkel miteinander einschliessen. Der im wesentlichen parallel zu den Hauptwänden 71 und 72 der eingeführten Kassette 67 verlaufende eine Schenkel 91 trägt den Wickelkernniederhalter 84, wobei die Blattfeder 85 des Wickelkernniederhalters mit dem Schenkel 91 verbunden ist. Der Schenkel 91 und der daran angebrachte Wickelkernniederhalter 84 sind dabei im wesentlichen in einer Ausnehmung 93 in der Deckwand 78 der Kassettenaufnahme 76 angeordnet. Über den anderen Schenkel 92 ist der Winkelhebel 90 mit seinem Wickelkernniederhalter 84 tragenden Schenkel 91 im wesentlichen quer zu den Hauptwänden der eingeführten Kassette 67 von einem Betätigungsteil für den als Trägerteil vorgesehenen Winkelhebel 90 verstellbar, wobei sich der Schenkel 91 durch die Ausnehmung 93 in der Deckwand 78 bewegt. Der Betätigungsteil ist in diesem Fall mit dem durch den Winkelhebel gebildeten Trägerteil einfach zu einem Bauteil vereinigt, und zwar ist der Betätigungsteil durch einen in den Schenkel 92 des Winkelhebels 90 eingesetzten Betätigungsstift 94 gebildet. Der Betätigungsstift ragt in den Einführweg der Kassette 67, wobei beim Einführen der Kassette diese den Betätigungsstift 94 entgegen der Kraft einer Rückstellfeder 95 mitnimmt und dieser den Winkelhebel 90 von seiner Ruhelage in seine Wirklage verstellt. Die Rückstellfeder 95 ist durch eine an der Kassettenaufnahme 76 befestigte Drahtfeder gebildet, die sich einerseits an einem Anschlag 96 an der Kassettenaufnahme abstützt und andererseits am Schenkel 92 des Winkelhebels 90 angreift und danach trachtet, den Winkelhebel 90 mit seinem Schenkel 92 an einem Begrenzungsanschlag 97 angelegt zu halten. Durch diesen Begrenzungsanschlag 97 ist, wie Fig. 7 zeigt, die Ruhelage des als Trägerteil für den Wickelkernniederhalter 84 vorgesehenen Winkelhebels 90 festgelegt.

Um den Winkelhebel 90 nach seiner Verstellung in seine Wirklage in dieser festzuhalten, ist an der Kassettenaufnahme eine durch eine schwenkbare, federbelastete Rastklinke 98 gebildete Verriegelungseinrichtung vorgesehen. Bei in seiner Ruhelage sich befindendem Winkelhebel 90 stützt sich die Rastklinke 98 unter der Wirkung der an ihr angreifenden Feder 99 mit ihrem hakenförmig ausgebildeten Ende 100 am Schenkel 92 des Winkelhebels 90 ab. Wenn der Winkelhebel 90 nach erfolgtem Einführen der Kassette 67 in seine Wirklage verstellt ist, fällt die Rastklinke 98 unter der Wirkung der Feder 99 ein und hält den Winkelhebel 90 über dessen Schenkel 92 fest, wie die Fig. 8 und 9 zeigen. Zum Lösen der durch die Rastklinke 98 gebildeten Verriegelungseinrichtung ist an der Kassettenaufnahme als Auslöseelement eine entgegen der Kraft einer gabelförmigen Blattfeder 101 verstellbare Drucktaste 102 vorgesehen, an deren Tastenstange eine Abschrägung 104 vorgesehen ist. Wenn die Drucktaste bei eingefallener Rastklinke niedergedrückt wird, dann wird über die Abschrägung 104 der Tastenstange 103 die Rastklinke 98 so weit verschwenkt, dass der Schenkel 92 des Winkelhebels vom hakenförmigen Ende 100 der Rastklinke 98 freigegeben wird und die Rückstellfeder 95 den Winkelhebel 90 wieder in seine Ruhelage verstellen kann. Bei dieser Verstellung des Winkelhebels von seiner Wirklage in seine Ruhelage stösst der Betätigungsstift 94 die Kassette 67 etwas aus der Kassettenaufnahme heraus, so dass dieselbe dann von Hand aus ergriffen werden und aus der Kassettenaufnahme entnommen werden kann. Im Gerät 66 ist ein Sperranschlag 105 vorgesehen, der bei in ihrer Arbeitsposition sich befindender Kassettenaufnahme dem freien Ende der Tastenstange 103 der Drucktaste 102 gegenüberliegt und auf diese Weise eine Betätigung der Drucktaste bei in ihrer Arbeitslage sich befindender Kassettenaufnahme sperrt, wodurch eine Fehlbedienung ausgeschlossen ist.

Da der Wickelkernniederhalter bei in seiner Ruhelage sich befindendem Winkelhebel ausserhalb des Einführweges der Kassette und daher ausserhalb des durch die Wände der schachtförmigen Kassettenaufnahme umschlossenen Aufnahmeraumes liegt, können die Deckwand und die Bodenwand der Kassettenaufnahme unter Berücksichtigung der Dimensionen der Kassette mit möglichst geringem Abstand zueinander liegen, was im Hinblick auf kleine Abmessungen der Kassettenaufnahme und folglich auf den von der Kassettenaufnahme beanspruchten Raumbedarf von Vorteil ist. Der Wickelkernniederhalter wird auch hier bereits beim Einführen der Kassette, also bei noch in ihrer Ladeposition sich befindender Kassettenaufnahme in seine Wirklage gebracht, so dass keine separate Verstellbewegung der Kassettenaufnahme bei deren Verstellung von ihrer Ladeposition in ihre Arbeitsposition erforderlich ist, um den Wickelkernniederhalter mit dem Wickelkern in Wirkverbindung zu bringen, was im Hinblick auf den für die Verstellung der Kassettenaufnahme erforderlichen Raumbedarf vorteilhaft ist. Der insgesamt gesehen geringe Raumbedarf für die Kassettenaufnahme ermöglicht es, die Geräteabmessungen klein zu halten.

Im Vorstehenden sind zwei Ausführungsbeispiele erfindungsgemässer Geräte beschrieben. Selbstverständlich sind aber noch weitere Ausgestaltungen möglich. Beispielsweise kann auch ein als Trägerteil vorgesehener Bügel mit mindestens einem Betätigungsteil zu einem Bauteil vereinigt sein. Ein solcher Bügel kann auch mit Kulissensteuereinrichtungen verstellbar gehalten sein, deren Schlitze an der Kassettenaufnahme und deren durch die Schlitze hindurchgeführte Rollen am Bügel vorgesehen sind. Auch kann ein solcher Bügel nur um eine fixe Schwenkachse gelagert sein. Anstelle von Schiebern als Betätigungsteile sind auch schwenkbare Hebel möglich. Auch im Hinblick auf die Verriegelungseinrichtungen bestehen mehrere Möglichkeiten ; beispielsweise können als selbsttätig lösbare Verriegelungseinrichtungen sogenannte Schadow-Klinken zur Anwendung kommen, die zwischen den als Betätigungsteilen vorgesehenen Schiebern und der Kassettenaufnahme wirksam sind. Von den Verriegelungseinrichtungen beim ersten Ausführungsbeispiel können die Verriegelungsstifte am Bügel und die Kulissenbahnen an der Kassettenaufnahme in entsprechender Weise angebracht sein. Als Festhalteeinrichtung kann am Bügel auch eine die Kassette nach ihrem Einführen hintergreifende Leiste vorgesehen sein. Ein als Trägerteil vorgesehener Winkelhebel kann beispielsweise auch um eine in Richtung des Einführweges verlaufende Schwenkachse verschwenkbar angeordnet sein. Selbstverständlich kann auch eine verschwenkbare Kassettenaufnahme vorgesehen sein, die mit einer Schwenkbewegung zwischen ihrer Ladeposition und ihrer Arbeitsposition verstellbar ist.

## Patentansprüche

1. Aufzeichnungs- und/oder Wiedergabegerät für einen in einer Kassette untergebrachten, bandförmigen Aufzeichnungsträger, die zum Aufwickeln desselben mindestens einen durch jede der beiden zueinander parallelen Hauptwände (5, 6) der Kassette (1) axial zugänglichen, rotierend antreibbaren Wickelkern (4, 4') aufweist, mit einer Kassettenaufnahme (14), die zwischen einer Ladeposition, (Fig. 3, 4), in der die mit ihren Hauptwänden parallel zu einem vorgegebenen Einführweg ausgerichtete Kassette längs dieses Einführweges in dieselbe einführbar ist, und einer Arbeitsposition (Fig. 6), in der die eingeführte Kassette eine Betriebslage im Gerät einnimmt und mit dem Wickelkern ein geräteseitiger, rotierend antreibbarer Wickeldorn (24) durch die demselben zugewandte Hauptwand der Kassette in Wirkverbindung steht, verstellbar ist und die einen Wickelkernniederhalter (28) aufweist, der an einem an der Kassettenaufnahme vorgesehenen, mit einem den Wickelkernniederhalter tragenden Abschnitt im wesentlichen parallel zu den Hauptwänden der eingeführten Kassette verlaufenden Trägerteil (29) angebracht ist und der durch die vom Wickeldorn abgewandte Hauptwand der Kassette mit dem Wickelkern in Wirkverbindung bringbar ist und bei in ihrer Betriebslage sich befindender Kassette den Wickelkern in einer vorgegebenen Relativlage zum Wickeldorn hält, dadurch gekennzeichnet, dass der Trägerteil (29) mit seinem den Wickelkernniederhalter tragenden Abschnitt zumindest quer zu den Hauptwänden der eingeführten Kassette zwischen einer Ruhelage, in der der Wickelkernniederhalter ausserhalb des Einführweges der Kassette liegt, und einer Wirklage, in der der Wickelkernniederhalter an den Wickelkern herangeführt ist, an der Kassettenaufnahme verstellbar gehalten ist und dass zur Verstellung des Trägerteiles an der Kassettenaufnahme mindestens ein gegenüber derselben verstellbarer Betätigungsteil (42) vorgesehen ist, der in den Einführweg der Kassette ragt, wobei beim Einführen der Kassette diese den Betätigungsteil entgegen der Kraft einer Rückstellfeder (47) mitnimmt und dieser den Trägerteil (29) von seiner Ruhelage in seine Wirklage verstellt und dabei den Wickelkernniederhalter (28) bereits bei in ihrer Ladeposition sich befindender Kassettenaufnahme an den Wickelkern heranführt.

2. Gerät nach Anspruch 1, dadurch gekennzeichnet, dass der Betätigungsteil (42) durch einen in Richtung des Einführweges der Kassette an der Kassettenaufnahme verstellbar geführten Schieber gebildet ist, an dem die Rückstellfeder (47) angreift und der einen Betätigungsanschlag (48) aufweist, der zum kraftschlüssigen Zusammenwirken mit einem am Trägerteil vorgesehenen Gegenanschlag (49) ausgebildet ist und der bei in seiner Ruhelage sich befindendem Trägerteil mit Abstand zum Gegenanschlag liegt, wobei beim Einführen der Kassette nach einem ersten Teilhub des von der Kassette mitgenommenen Schiebers der Betätigungsanschlag am Gegenanschlag zur Anlage kommt und daran anschliessend beim weiteren Hub des Schiebers über den Gegenanschlag den Trägerteil von seiner Ruhelage in seine Wirklage verstellt.

3. Gerät nach Anspruch 2, dadurch gekennzeichnet, dass der Schieber eine in Richtung des Einführweges der Kassette verlaufende Sperrfläche (50) und der Trägerteil einen quer zur Sperrfläche verlaufenden Sperranschlag (51) aufweist, der bei in seiner Ruhelage sich befindendem Trägerteil der Sperrfläche gegenüberliegt und dabei eine Verstellung des Trägerteiles in seine Wirklage sperrt, wobei beim Einführen der Kassette nach dem ersten Teilhub der Verstellung des Schiebers die Sperrfläche den Sperranschlag am Trägerteil zur Verstellung desselben von seiner Ruhelage in seine Wirklage freigibt.

4. Gerät nach Anspruch 2 oder 3, dadurch gekennzeichnet, dass der Schieber eine quer zur Richtung des Einführweges der Kassette verlaufende Mitnehmerfläche (53) und der Trägerteil einen quer zur Mitnehmerfläche verlaufenden Mitnehmeranschlag (54) aufweist, an den bei der Verstellung des Schiebers durch die an ihm angreifende Rückstellfeder entgegen der Richtung des Einführweges und ausserhalb seiner Ruhelage sich befindendem Trägerteil beim Herausführen der Kassette aus der Kassettenaufnahme die Mitnehmerfläche (53) von der Rückstellfeder zum Verstellen des Trägerteils von seiner Wirklage in seine Ruhelage angelegt gehalten ist und der nach dem Erreichen der Ruhelage des Trägerteiles die Mitnehmerfläche zur weiteren Verstellung des Schiebers durch die Rückstellfeder zum Herausführen der Kassette aus der Kassettenaufnahme freigibt.

5. Gerät nach Anspruch 3 und 4, dadurch gekennzeichnet, dass der Sperranschlag (51) und der Mitnehmeranschlag (54) gemeinsam an einem Fortsatz des Trägerteiles vorgesehen sind und dass die Sperrfläche (50) und die Mitnehmerfläche (53) durch zwei im wesentlichen senkrecht zueinander verlaufende Stirnflächen eines plattenförmig ausgebildeten Schiebers gebildet sind.

6. Gerät nach Anspruch 1, dadurch gekennzeichnet, dass der Betätigungsteil (42) und der Trägerteil (29) zu einem Bauteil vereinigt sind.

7. Gerät nach einem der vorhergehenden Ansprüche, dadurch gekennzeichnet, dass mindestens eine durch die Betätigung eines Auslöseelementes (1) lösbare Verriegelungseinrichtung (55) vorgesehen ist, die nach dem Verstellen des Trägerteils von seiner Ruhelage in seine Wirklage beim Einführen der Kassette zumindest den beim Einführen von der Kassette mitgenommenen Betätigungsteil (42) entgegen der Kraft der Rückstellfeder in seiner verstellten Lage festhält und die nach dem Lösen derselben die Verstellung des Trägerteiles in seine Ruhelage und die Verstellung des Betätigungsteiles durch die Rückstellfeder zum Herausführen der Kassette aus der Kassettenaufnahme freigibt.

8. Gerät nach Anspruch 7, dadurch gekennzeichnet, dass die Verriegelungseinrichtung (55) am Trägerteil angreift und diesen in seiner Wirklage festhält, wobei der Betätigungsteil über den mit der Verriegelungseinrichtung in seiner Wirklage festgehaltenen Trägerteil entgegen der Kraft der Rückstellfeder in seiner verstellten Lage festgehalten ist.

9. Gerät nach einem der Ansprüche 1 bis 8, dadurch gekennzeichnet, dass der Trägerteil (29) durch einen um eine parallel zu den Hauptwänden der eingeführten Kassette verlaufende Schwenkachse verschwenkbaren Winkelhebel gebildet ist, dessen im wesentlichen parallel zu den Hauptwänden der eingeführten Kassette verlaufender einer Schenkel den Wickelkernniederhalter (28) trägt und über dessen anderen Schenkel der Winkelhebel mit seinem den Wickelkernniederhalter tragenden Schenkel im wesentlichen quer zu den Hauptwänden der eingeführten Kassette vom Betätigungsteil verstellbar ist.

10. Gerät nach einem der Ansprüche 1 bis 8, dadurch gekennzeichnet, dass der Trägerteil (29) durch einen in Richtung des Einführweges der Kassette gesehen U-förmigen Bügel gebildet ist, dessen Stegwand im wesentlichen parallel zu den Hauptwänden der eingeführten Kassette verläuft und den Wickelkernniederhalter trägt und mit dessen beiden senkrecht zur Stegwand abgewinkelten Seitenwänden der Bügel zumindest quer zu den Hauptwänden der eingeführten Kassette an der Kassettenaufnahme verstellbar gehalten ist.

11. Gerät nach Anspruch 10, dadurch gekennzeichnet, dass zum verstellbaren Halten des Bügels (29) an der Kassettenaufnahme zwischen dieser und jeder Seitenwand des Bügels eine Kulissensteuereinrichtung (37) vorgesehen ist, die mindestens eine Kulissenfläche mit einem gegenüber der Richtung des Einführweges der Kassette geneigt verlaufenden Abschnitt aufweist, der den Bügel zusätzlich in Richtung des Einführweges der Kassette an der Kassettenaufnahme verstellt.

12. Gerät nach Anspruch 7 oder 8 und 11, dadurch gekennzeichnet, dass die Verriegelungseinrichtung (55) beim weiteren Verstellen des als Trägerteil vorgesehenen Bügels (29) aus seiner Wirklage in Richtung des Einführweges der Kassette durch weiteres Verstellen der hierbei das Auslöseelement bildenden Kassette in Richtung des Einführweges selbsttätig lösbar ist.

13. Gerät nach Anspruch 12, dadurch gekennzeichnet, dass die Verriegelungseinrichtung einen quer zur Richtung des Einführweges der Kassette verstellbaren Verriegelungsstift (56) aufweist, der in eine in sich geschlossene, im wesentlichen herzförmige Kulissenbahn ragt, die beim Einführen der Kassette und dabei von der Kassette zusätzlich in Richtung des Einführweges mitgenommenen Bügel den Verriegelungsstift von einer im Bereich der Herzspitze liegenden Ausgangsstellung in der Kulissenbahn in eine im Bereich des Herzeinschnittes liegende Verriegelungsstellung in der Kulissenbahn leitet, in der der Verriegelungsstift über die Kulissenbahn zumindest den beim Einführen der Kassette mitgenommenen Betätigungsteil entgegen der Kraft der Rückstellfeder in seiner verstellten Lage festhält und aus der zum Lösen der Verriegelungseinrichtung der Verriegelungsstift beim weiteren Verstellen des Bügels aus seiner Wirklage in Richtung des Einführweges der Kassette von der Kulissenbahn selbst wieder herausführbar ist, wobei nach dem Lösen der Verriegelungseinrichtung beim Verstellen des Bügels durch die Rückstellfeder entgegen der Richtung des Einführweges die Kulissenbahn den aus der Verriegelungsstellung herausgeführten Verriegelungsstift in seine Ausgangsstellung zurückleitet.

14. Gerät nach einem der vorhergehenden Ansprüche für eine Kassette mit einem beim Einführen derselben in die Kassettenaufnahme entgegen der Kraft einer Schliessfeder (10) verstellbaren Kassettenverschluss, dadurch gekennzeichnet, dass am verstellbaren Trägerteil für den Wickelkerniederhalter zusätzlich eine Festhalteeinrichtung zum Festhalten der in die in ihrer Ladeposition sich befindende Kassettenaufnahme eingeführten, von der Schliessfeder entgegen der Richtung des Einführweges belasteten Kassette angebracht ist.

15. Gerät nach Anspruch 14, dadurch gekennzeichnet, dass die Festhalteeinrichtung durch mindestens einen am Trägerteil befestigten, senkrecht zu den Hauptwänden der eingeführten Kassette verlaufenden Stift gebildet ist, der bei der Verstellung des Trägerteiles von seiner Ruhelage in seine Wirklage mit der Kassette in Wirkverbindung tritt.

## Claims

1. A recording and/or reproducing apparatus for a record carrier in the form of a tape contained in a cassette, which comprises at least one rotatable reel hub (4, 4') for taking up said record carrier, which reel hub is axially accessible through each of the two mutually parallel major walls (5, 6) of the cassette (1), which apparatus comprises a cassette holder (14) which is movable between a loading position (Figs. 3, 4), in which the cassette, when its major walls extend parallel to a predetermined insertion path, can be inserted into said holder along said insertion path, and an operating position (Fig. 6), in which the inserted cassette occupies an operating position in the apparatus and co-operates with the reel hub by means of a rotatable winding mandrel (14) on the apparatus through the cassette majorwall which faces said winding mandrel, which holder comprises a reel-hub hold-down means (28) which is arranged on a carrying member (29) which is disposed on the cassette holder and which comprises a portion carrying the reel-hub hold-down means and extending substantially parallel to the major walls of the inserted cassette, which means can be made to co-operate with the reel hub through the cassette major-wall which is remote from the winding mandrel and holds the reel hub in a predetermined position relative to the winding mandrel when the cassette is in the operating position, characterized in that the carrying member (29) with its portion carrying the reel-hub hold-down means is arranged on the cassette holder so as to be movable, at least transversely of the major walls of the inserted cassette between a rest position, in which the reel-hub hold-down means is disposed outside the insertion path of the cassette, and an operating position, in which the reel-hun hold-down means engages with the reel hub, and for moving the carrying member the cassette holder is provided with at least one actuating member (42) which is movable relative to said holder and which projects into the insertion path of the cassette such that during insertion of the cassette the cassette moves the actuating member against the force of a return spring (47) and said actuating member sets the carrying member (29) from its rest position to its operating position, the reelhub hold-down means (28) already being disposed near the reel-hub when the cassette holder is in its loading position.

2. An apparatus as claimed in Claim 1, characterized in that the actuating member (42) comprises a slide which is arranged on the cassette holder so as to be movable in the direction of the insertion path of the cassette, which slide is subject of the action of the return spring (47) and which comprises an actuating stop (48) which is adapted to co-operate in a force-sustained manner with a complementary stop (49) on the carrying member (29) and which is spaced from the complementary stop when the carrying member is in its rest position, the actuating stop abutting with the complementary stop upon insertion of the cassette after a first partial travel of the slide which is moved by the cassette and, subsequently, as the slide travels further, sets the carrying member from its rest position to its operating position *via* the complementary stop.

3. An apparatus as claimed in Claim 2, characterized in that the slide comprises a stop surface (50) which extends in the direction of the insertion path of the cassette and the carrying member comprises a latching stop (51) which extends transversely of the stop surface, which latching stop is disposed opposite the stop surface when the carrying member is in its rest position and thereby blocks a movement of the carrying member to its operating position, the stop surface releasing the latching stop on the carrying member upon insertion of the cassette after the first partial travel of the slide to allow said member to be moved from its rest position to its operating position.

4. An apparatus as claimed in Claim 2 or 3, characterized in that the slide comprises an actuating surface (53) which extends transversely of the direction of the insertion path of the cassette and the carrying member comprises an actuating stop (54) which extends transversely of the actuating surface, which actuating stop is kept in engagement with the actuating surface (53) by the return spring which acts on the carrying member to move said member from its operating position to its rest position when the return spring moves the slide (42, 42') in a direction opposite to the direction of the insertion path 22 and the carrying member is outside its rest position during removal of the cassette from the cassette holder, and which actuating stop when the carrying member has reached the rest position releases the actuating surface to permit the slide to be moved further by the return spring so as to allow the cassette to be removed from the cassette holder.

5. An apparatus as claimed in Claim 3 and 4, characterized in that both the latching stop (51) and the actuating stop (54) are arranged on a projection of the carrying member and the stop surface (50) and the actuating surface (53) are formed by two end faces of a plate-shaped slide, which end faces extend substantially perpendicularly to each other.

6. An apparatus as claimed in Claim 1, characterized in that the actuating member (42) and the carrying member (29) are combined to form a single component.

7. An apparatus as claimed in any of the preceding Claims, characterized in that there is provided at least one latching device (55), which can be released by actuation of a release element (1), which after the carrying member has moved from its rest position to its operating position during insertion of the cassette at least retains the actuating member (42), which is moved along during insertion of the cassette in its actuating position against the force of the return spring and which after it has been released allows the carrying member to be moved to its rest position and the actuating member to be moved by the return spring so as to permit the cassette to be removed from the cassette holder.

8. An apparatus as claimed in Claim 7, characterized in that the latching device (55) acts on the carrying member and retains this member in its operating position, the actuating member being retained in its actuated position against the force of the return spring *via* the carrying member which is retained in its operating position by the latching device.

9. An apparatus as claimed in any of the Claims 1 to 8, characterized in the carrying member (29) comprises a bellcrank lever which is pivotable about a pivotal axis which extends parallel to the major walls of the inserted cassette, one lever arm (91) which extends substantially parallel to the major walls of the inserted cassette carrying the reel-hub hold-down means (38) and the lever with its arm carrying the reel-hub hold-down means being movable substantially transversely of the major walls of the inserted cassette by the actuating member (94) *via* the other lever arm.

10. An apparatus as claimed in any of the Claims 1 to 8, characterized in that the carrying member (23) is a member which is U-shaped viewed along the insertion path of the cassette, which has a transverse wall which extends substantially parallel to the major walls of the inserted cassette with its two side walls which extend perpendicularly to the transverse wall.

11. An apparatus as claimed in Claim 10, characterized in that for mounting the member (29) on the cassette holder so as to be movable a guide-surface device (37) is arranged between said holder and each side wall of the member, which device comprises at least one guide surface having a portion which is inclined relative to the direction of the insertion path of the cassette, which surface additionally moves the member relative to the cassette holder in the direction of the insertion path of the cassette.

12. An apparatus as claimed in Claim 7 or 8 and 11, characterized in that when the member (29), which serves as carrying member, is moved further out of its operating position in the direction of the insertion path of the cassette the latching device (55) can be released automatically by a further movement of the cassette, which now forms the release element, in the direction of the insertion path.

13. An apparatus as claimed in Claim 12, characterized in that the latching device comprises a latching pin (56) which is movable transversely of the direction of the insertion path of the cassette, which pin projects into a closed substantially heart-shaped guide path, which during insertion of the cassette and the resulting movement of the member in the direction of the insertion path guides the latching pin from an initial position in the guide path at the location of the apex to a latched position in the guide path near the indentation, in which latched position the latching pin, *via* the guide path, at least retains the actuating member, which has been moved along during insertion of the cassette, in its actuated position against the force of the return spring and out of which the latching pin can be moved *via* the guide path in order to release the latching device when the member is moved further out of its operating position in the direction of the insertion path of the cassette, the guide path guiding the latching pin, which has been moved out of its latched position, back to its initial position after the latching device has been released upon the movement of the member in a direction opposite to the direction of the insertion path by the return spring.

14. An apparatus as claimed in any of the preceding Claims for a cassette comprising a cassette closing element which can be moved against the force of a closing spring (10) upon insertion of the cassette into the cassette holder, characterized in that on the movable carrying member for the reel-hub hold-down means there is also arranged a retaining device for retaining the cassette which has been inserted into the cassette holder, which is in its loading position, and which is urged in a direction opposite to the direction of the insertion path by the closing spring.

15. An apparatus as claimed in Claim 14, characterized in that the retaining device comprises at least one pin which is secured to the carrying member and which extends perpendicularly to the major walls of the inserted cassette which pin co-operates with the cassette when the carrying member is moved from its rest position to its operating position.

**Revendications**

1. Appareil d'enregistrement et/ou de reproduction à utiliser en combinaison avec un porteur d'information en forme de bande contenue dans une cassette qui pour l'envidage de cette bande comprend au moins un moyeu de bobinage (4, 4') qui peut être animé d'un mouvement de rotation et est axialement accessible à travers chacune des deux parois principales parallèle (5, 6) de la cassette (1), l'appareil en question comportant un magasin de cassette (14) qui est mobile entre d'une part une position de chargement (figures 3, 4) dans laquelle la cassette, ses parois principales étant orientées parallèlement à une voie d'insertion prédéterminée, peut être introduite dans ledit magasin le long de ladite voie, et d'autre part une position de travail (figure 6) dans laquelle la cassette introduite occupe une position de fonctionnement dans l'appareil et coopère avec le moyeu à l'aide d'un mandrin de bobinage rotatif (24) sur l'appareil à travers la paroi de cassette principale qui fait face audit mandrin, alors que le magasin de cassette comprend un élément d'assujettissement de moyeu de bobinage (28) élaboré sur un élément de support (29) qui est prévu sur le magasin de cassette et comporte une partie portant l'élément d'assujettissement de moyeu de bobinage et s'étendant quasi parallèlement aux parois principales de la cassette mise en place dans l'appareil, tandis que ledit élément d'assujettissement peut être amené à coopérer avec le moyeu à travers la paroi de cassette principale située du côté opposé au mandrin et maintient le moyeu dans une position prédéterminée par rapport au mandrin lorsque la cassette occupe sa position de fonctionnement, caractérisé en ce que l'élément de support (29) avec sa partie portant l'élément d'assujettissement de moyeu est élaboré sur le magasin de cassette de façon à être mobile au moins transversalement aux parois principales de cassette introduite entre une position de repos dans laquelle l'élément d'assujettissement de moyeu se trouve en dehors de la voie d'introduction de la cassette, et une position de fonctionnement dans laquelle ledit élément d'assujettissement est en contact avec le moyeu, et que pour déplacer l'élément de support, le magasin de cassette est muni d'au moins une partie de manœuvre (42) qui est mobile par rapport audit magasin et pénètre dans la voie d'introduction de la cassette, alors qu'à l'occasion de la mise en place de la cassette, celle-ci entraîne la partie de manœuvre à l'encontre de l'action d'un ressort de rappel (47) et que ladite partie de manœuvre déplace l'élément de support (29) de sa position de repos dans sa position de fonctionnement, tandis que l'élément d'assujettissement de moyeu (28) est déjà amené contre le moyeu lorsque le magasin de cassette se trouve dans sa position de chargement.

2. Appareil selon la revendication 1, caractérisé en ce que la partie de manœuvre (42) est formée par un curseur guidé qui est prévu sur le magasin de cassette de façon à être mobile dans la direction de la voie d'insertion de la cassette, ce curseur étant soumis à l'action du ressort de rappel (47) et comprenant une butée de manœuvre (48) coopérant à précontrainte avec une contrebutée (49) dont est muni l'élément de support, cette butée de manœuvre étant située à une certaine distance de la contrebutée lorsque l'élément de support est en position de repos, alors que la butée de manœuvre bute contre la contrebutée lors de l'introduction de la cassette après une première partie de la course du curseur entraîné par la cassette, tandis que par la suite, lorsque le curseur se déplace plus loin, la butée de manœuvre déplace, par l'intermédiaire de la contrebutée, l'élément de support de sa position de repos dans sa position de travail.

3. Appareil selon la revendication 2, caractérisé en ce que le curseur comporte une face d'arrêt (50) s'étendant dans la direction de la voie d'introduction de la cassette alors que l'élément de support comporte une butée d'arrêt (51) qui est transversale à ladite face d'arrêt et qui, lorsque l'élément de support est dans sa position de repos, se trouve en regard de la face d'arrêt et empêche ainsi un déplacement dudit élément dans sa position de travail, alors que lors de l'entrée d'une cassette et après la première partie de la course du curseur, la face d'arrêt libère la butée d'arrêt sur l'élément de support pour permettre à ce dernier de quitter sa position de repos et de prendre sa position de travail.

4. Appareil selon la revendication 2 ou 3, caractérisé en ce que le curseur comporte une face d'entraînement (53) qui est transversale à la direction de la voie d'insertion de la cassette et que l'élément de support comporte une butée d'entraînement (54) qui est transversale à ladite face d'entraînement, cette butée d'entraînement étant maintenue en contact avec la face d'entraînement (53) par le ressort de rappel qui agit sur l'élément de support afin de déplacer cet élément de sa position de travail dans sa position de repos lorsque le ressort de rappel déplace le curseur dans la direction opposée à la direction d'insertion et l'élément de support ne se trouve pas dans sa position de repos cependant que la cassette est sortie de son magasin, tandis que l'élément de support ayant atteint la position de repos, ladite butée d'entraînement libère la face d'entraînement pour permettre au curseur d'être déplacé plus loin par le ressort de rappel pour permettre à la cassette d'être sortie de son magasin.

5. Appareil selon les revendications 4 et 5, caractérisé en ce que la butée d'arrêt (51) et la butée d'entraînement (54) sont élaborées ensemble sur un prolongement de l'élément de support, et que la face d'arrêt (50) et la face d'entraînement (53) sont formées par deux faces frontales d'un curseur en forme de plaque, ces deux faces étant pratiquement perpendiculaires l'une à l'autre.

6. Appareil selon la revendication 1, caractérisé en ce que la partie de manœuvre (42) et l'élément de support (29) sont combinés en un seul constituant.

7. Appareil selon l'une quelconque des revendications précédentes, caractérisé en ce que l'appareil comporte au moins un dispositif de verrouillage (55) qui peut être rendu inopérant par la manœuvre d'un élément adéquat (1), dispositif de verrouillage qui après le déplacement de l'élément de support de sa position de repos dans sa position de fonctionnement lors de l'introduction de la cassette, retient en position déplacée à l'encontre de l'action du ressort de rappel au moins la partie de manœuvre (42) entraînée lors de l'introduction de la cassette, et qui après être devenu inopérant, permet le mouvement de l'élément de support vers sa position de repos ainsi que le mouvement de la partie de manœuvre par le ressort de rappel pour permettre ainsi à la cassette d'être sortie de son magasin.

8. Appareil selon la revendication 7, caractérisé en ce que le dispositif de verrouillage (55) agit sur l'élément de support et maintient celui-ci dans sa position de travail, alors que la partie de manœuvre est retenue dans la position imposée à l'encontre de la tension du ressort de rappel par l'intermédiaire de l'élément de support qui est retenu en position de fonctionnement par le dispositif de verrouillage.

9. Appareil selon l'une quelconque des revendications 1 à 8, caractérisé en ce que l'élément de support (29) est formé par un levier angulaire qui est à même de pivoter sur un axe de pivotement s'étendant parallèlement aux parois principales de la cassette introduite et dont un bras de levier, pratiquement parallèle aux parois principales de la cassette introduite, porte l'élément d'assujettissement de moyeu (28), alors que par l'intermédiaire de son autre bras, ledit levier angulaire avec son bras portant ledit élément d'assujettissement de moyeu peut être déplacé pratiquement transversalement aux parois principales de la cassette par la partie de manœuvre.

10. Appareil selon l'une quelconque des revendications 1 à 8, caractérisé en ce que l'élément de support (29) est formé par un étrier en forme de U vu dans la direction de la voie d'insertion de la cassette, la traverse reliant les ailes de cet U étant pratiquement parallèle aux parois principales de la cassette introduite et portant l'élément d'assujettissement de moyeu, ledit étrier étant monté sur le magasin de cassette de façon à pouvoir se mouvoir au moins transversalement aux parois principales de la cassette introduite avec ses deux ailes qui sont perpendiculaires à la traverse de l'U que forme ledit étrier.

11. Appareil selon la revendication 10, caractérisé en ce que pour maintenir l'étrier (29) mobile sur le magasin de cassette, l'appareil est muni d'un dispositif de commande à coulisse (37) entre ledit magasin et chaque paroi latérale de l'étrier, ledit dispositif comprenant au moins une face de coulisse ayant une partie qui est inclinée par rapport à la voie d'insertion de la cassette, ladite face de coulisse imposant un déplacement supplémentaire à l'étrier par rapport au magasin de cassette dans la direction de la voie d'insertion de la cassette.

12. Appareil selon la revendication 7 ou les revendications 8 et 11, caractérisé en ce que lorsque l'étrier (29) qui fait office d'élément de support, est éloigné plus loin à partir de sa position de fonctionnement dans la direction de la voie d'insertion de la cassette, le dispositif de verrouillage (55) peut automatiquement devenir inopérant par un déplacement supplémentaire de la cassette dans la direction de la voie d'insertion, la cassette constituant maintenant l'élément rendant inopérant le dispositif de verrouillage.

13. Appareil selon la revendication 12, caractérisé en ce que le dispositif de verrouillage comporte une broche de verrouillage (56) qui est mobile transversalement à la direction de la voie d'insertion de la cassette et pénètre dans une voie de coulissement fermée pratiquement en forme de cœur qui durant l'insertion de la cassette et le mouvement résultant de l'étrier dans la direction de la voie d'insertion, guide la tige de verrouillage d'une position de départ dans la voie de coulissement à l'endroit de l'apex de sa forme en cœur dans une position de verrouillage dans ladite voie à l'endroit de l'indentation de sa forme en cœur, position de verrouillage dans laquelle la broche de verrouillage maintient, par l'intermédiaire de sa voie de coulissement, au moins la partie de manœuvre, déplacée au cours de l'insertion de la cassette, dans sa position déplacée à l'encontre de la tension du ressort de rappel, alors que ladite broche de verrouillage peut être éloignée, par l'intermédiaire de sa voie de coulissement, pour rendre inopérant le dispositif de verrouillage lorsque l'étrier est éloigné davantage de sa position de fonctionnement dans la direction de la voie d'insertion de la cassette, alors que le dispositif de verrouillage ayant été rendu inopérant par le mouvement de l'étrier dans la direction opposée à la direction de la voie d'insertion de la cassette par le ressort de rappel, la voie de coulissement guide de nouveau la broche de verrouillage, sortie de sa position de verrouillage, dans sa position de départ.

14. Appareil selon l'une quelconque des revendications précédentes et à utiliser en combinaison avec une cassette munie d'une fermeture qui lors de l'introduction de la cassette dans son magasin est manœuvrable à l'encontre de la tension d'un ressort de fermeture (10), caractérisé en ce qu'il est élaboré sur l'élément de support pour l'élément d'assujettissement de moyeu en outre un dispositif de retenue pour retenir la cassette introduite en place dans le magasin de cassette et située dans sa position de chargement, ledit dispositif de retenue subissant de la part du ressort de fermeture une certaine précontrainte dans une direction opposée à la direction de la voie d'insertion de la cassette.

15. Appareil selon la revendication 14, caractérisé en ce que le dispositif de retenue est formé par au moins une broche qui est solidaire de l'élément de support, est perpendiculaire aux parois principales de la cassette introduite et coopère avec la cassette lorsque l'élément de support est déplacé de sa position de repos dans sa position de fonctionnement.

0 096 924

Fig.1

Fig.2

Fig.3

1

Fig.4

Fig.5

Fig.6

Fig.7

Fig.8

Fig.9

3